# EUROPÄISCHE PATENTSCHRIFT

(11) **EP 4 277 834 B1**
(45) Veröffentlichungstag und Bekanntmachung des Hinweises auf die Patenterteilung: **14.05.2025**
(21) Anmeldenummer: 22701353.9
(22) Anmeldetag: 18.01.2022
(51) Int. Cl.: B62D 35/00

(54) **DACHSPOILER**
ROOF SPOILER
BECQUET DE TOIT

(30) Priorität: 18.01.2021 DE 102021100924
(43) Veröffentlichungstag der Anmeldung: 22.11.2023
(73) Patentinhaber: Mercedes-Benz Group AG, 70372 Stuttgart (DE); Montaplast GmbH, 51590 Morsbach (DE)
(72) Erfinder: PETERMANN, Jörg, 51588 Nümbrecht (DE); HARTMANN, Wolfgang, 75181 Pforzheim (DE)
(74) Vertreter: Bobzien, Hans Christoph
(86) Internationale Anmeldenummer: PCT/EP2022/050981
(87) Internationale Veröffentlichungsnummer: WO 2022/152929

(56) Entgegenhaltungen:
- DE-A1- 102008 061 560
- DE-A1- 102014 203 957

## Beschreibung

Die Erfindung betrifft einen Dachspoiler eines Kraftfahrzeuges, insbesondere eines Personenkraftfahrzeuges, gemäß dem Oberbegriff von Anspruch 1, sowie ein Kraftfahrzeug mit Dachspoiler und ein Herstellungsverfahren desselben. Gattungsgemäße Dachspoiler sind an Kraftfahrzeugen, insbesondere Personenkraftfahrzeugen, in Verlängerung der Fahrzeugdachfläche am Fahrzeug montiert, beispielsweise an der Rückwandtür oder Rohbauhecktür desselben.

Gattungsgemäße Heckdachspoiler werden üblicherweise mit Oberschale und Unterschale als separate Bauteile, insbesondere jeweils als Spritzgussteile, hergestellt, welche anschließend zusammenzufügen sind. Die Oberschale ist hierbei farbbeschichtet, also in der Fahrzeugfarbe lackiert. Ferner weist der Dachspoiler in der Regel einen Wischertunnel auf, welcher der Aufnahme des Heckscheibenwischers des jeweiligen Kraftfahrzeuges dient.

Das Zusammenfügen von Oberschale und Unterschale erfolgt in der Regel durch einen mehrstufigen, sequenziellen Schweißvorgang, beispielsweise durch Ultraschallschweißen. Hierzu ist eine aufwendige und teure Ultraschallschweißmaschine erforderlich, welche in der Regel segmentierte Sonotroden zur Ultraschallverschweißung aufweist. Zur Durchführung des Schweißvorganges müssen die Sonotroden in ihrer Lage konturgenau an Oberschale und Unterschale des Dachspoilers angepasst werden, um eine zuverlässige Schweißverbindung auszubilden, was einen hohen Zeitaufwand zur Justierung der Sonotroden erfordert. Nach Verbindung von Oberschale und Unterschale ist dann der als separates Bauteil hergestellte Wischertunnel an der vorgefertigten Bauteilgruppe zu befestigen. Es besteht daher das Bedürfnis, einen Dachspoiler bereitzustellen, welcher kostengünstig herstellbar ist.

Ferner muss ein Dachspoiler jedoch auch ein komplexes Anforderungsprofil erfüllen. Zum einen muss der Spoiler beim Betrieb des Straßenfahrzeuges, insbesondere auch bei hohen Geschwindigkeiten eines Straßenfahrzeuges und damit verbunden hohen Windlasten, eine ausreichende Stabilität und Festigkeit aufweisen, was insbesondere auch eine sehr stabile Verbindung des Dachspoilers mit der Fahrzeugkarosserie, beispielsweise der Rückwandtür des Fahrzeuges, erfordert. Zudem werden auf einen Dachspoiler auch oftmals hohe mechanische Kräfte ausgeübt. Dies ist beispielsweise in einer Waschstraße der Fall oder wenn ein Fahrzeug mit einer Dachlast bestückt wird. Hohe manuelle Kräfte werden auf den Dachspoiler auch beispielsweise ausgeübt, wenn ein Fahrzeug manuell angeschoben wird, beispielsweise im Wintereinsatz, und hierbei das Anschieben des Fahrzeuges durch manuellen Angriff an dem Dachspoiler erfolgt. Der Dachspoiler sowie auch der Befestigungsbereich desselben an der Fahrzeugkarosserie muss somit hohe mechanische Kräfte aufnehmen können, und auch wesentlich höhere mechanische Kräfte als zum Beispiel andere Elemente der Fahrzeugaußenhaut wie Seitenspoiler, Antennenblenden oder dergleichen.

Ferner stellt der Dachspoiler, insbesondere die Oberseite desselben, einen Teilbereich der vom Kraftfahrzeug optisch wahrgenommenen Außenfläche dar. Zumindest die Außenfläche der Oberschale, welche im an dem Kraftfahrzeug montierten Zustand die Verlängerung der Fahrzeugdachfläche ausbildet, muss daher eine hohe optische Güte aufweisen, welche zumeist als "Klasse A"-Güte bezeichnet wird. Dies erfordert, dass die Oberseite der Oberschale eine sehr glatte und störungsfreie Fläche sein muss, welche beispielsweise praktisch frei von Sinkstellen, Einfallstellen oder anderen optisch störenden Unregelmäßigkeiten ist. Derartige Sinkstellen werden insbesondere ausgebildet, wenn benachbarte Bauteilbereiche mit unterschiedlichen Materialstärken vorliegen und diese benachbarten Bauteilbereiche unterschiedlicher Materialschrumpfung erliegen.

Zudem stellt ein Dachspoiler ein in seiner Formgestalt komplexes Bauteil dar, da dieser zum einen Befestigungsbereiche zur Befestigung des Dachspoilers an dem Fahrzeug aufweist und in der Regel weitere Funktionselemente wie Sensoren, Heckbeleuchtung oder dergleichen aufnehmen muss, wozu an dem Spoiler entsprechende Halterungs- und/oder Befestigungsbereiche vorgesehen sind. Ferner ist es das generelle Bedürfnis, dass das jeweilige Fahrzeugteil, hier der Dachspoiler, ein möglichst geringes Gewicht aufweist, um den Herstellungsaufwand ökologischer zu gestalten und die Betriebskosten des Fahrzeuges wie bspw. dessen Energieverbrauch zu reduzieren.

Ein gattungsgemäßer Dachspoiler ist bekannt aus EP 3 044 077 B1, der jedoch einen relativ komplizierten Aufbau aufweist, weil das den Dachspoiler tragende Verstärkungselement zweiteilig mit einem inneren Hohlraum aufgebaut ist und in diesem Verstärkungselement ausgebildete Rillen oder Nuten umfasst, in welche ein korrespondierender Innensteg des Dachspoilers in Einbaulage eingreift. Insofern ist der Aufbau relativ kompliziert und voluminös, benötigt also relativ viel Raum. Schließlich hat sich diese Ausgestaltung nicht als ausreichend stabil erwiesen.

Weiterer Stand der Technik ist bekannt aus den gattungsfremden DE 198 48 463 A1, DE 10 2015 004 982 A1, DE 10 2016 015 532 A1, DE 10 2009 042 845 A1, WO 2013/125015 A1 sowie DE 10 207 114 038 A1. Noch weiteren Stand der Technik stellen DE 10 2008 061 560 A1 und DE 10 2014 203957 A1 dar.

Der Erfindung liegt somit die Aufgabe zugrunde, einen Dachspoiler bereitzustellen, welcher die oben genannten Probleme teilweise oder vollständig löst, wobei der Dachspoiler insbesondere kostengünstig herstellbar ist, eine hohe mechanische Stabilität aufweist und zumindest an der Oberseite der Oberschale eine optisch möglichst hochqualitative Oberfläche aufweist.

Diese Aufgabe wird durch die Bereitstellung eines Dachspoilers gemäß Anspruch 1 gelöst. Vorteilhafte Ausführungsformen ergeben sich aus den Unteransprüchen. Ferner wird die Aufgabe durch die Bereitstellung eines Kraftfahrzeuges mit an diesem montierten Dachspoiler gemäß Anspruch 13 und ein Herstellungsverfahren nach Anspruch 15 gelöst.

Erfindungsgemäß ist der Dachspoiler derart ausgebildet, dass die Oberschale als Spritzprägeteil, vorzugsweise als einstückiges Spritzprägeteil, ausgebildet ist, wobei die vorbestimmten Befestigungsbereiche zur Befestigung des Dachspoilers an dem Fahrzeug zumindest teilweise oder vollständig an der Oberschale einstückig angeformt sind.

Durch umfangreiche Versuche im Rahmen der Erfindung hat es sich als besonderer Vorteil herausgestellt, dass durch das erfindungsgemäß eingesetzte Spritzprägeverfahren der Dachspoiler mit sehr hoher mechanischer Stabilität in Kombination mit einer hohen optischen Güte der Oberschalenoberfläche und zudem geringem Gewicht hergestellt werden kann, beispielsweise gegenüber Dachspoilern mit Oberschalen in Ausbildung als Kunststoffspritzgussteil. So hat es sich herausgestellt, dass im Spritzgussverfahren hergestellte Oberschalen nicht die erforderlichen Festigkeiten und Stabilitäten der Befestigungsbereiche bei zugleich sehr hoher optischer Qualität der Oberschalenaußenseite, beispielsweise im Bereich einer Klasse A-Qualität, aufweisen, insbesondere da höhere Materialstärken oder Versteifungen zu Oberflächenfehlern wie Sinkstellen, Einfallstellen oder anderen optisch störenden Unregelmäßigkeiten führen. So hat es sich herausgestellt, dass bei Spritzguss-Oberschalen die Befestigungsbereiche zur Befestigung des Spoilers an dem Fahrzeug an der Unterschale angeordnet sein müssen, um die Oberflächenqualität der Oberschale nicht zu stark zu beeinträchtigen. Dies ist bei erfindungsgemäßen Spoilern mit Spritzpräge-Oberschale jedoch überraschenderweise nicht der Fall. Ferner hat es sich im Rahmen der Erfindung herausgestellt, dass auch die Befestigungsbereiche des Dachspoilers zur Befestigung desselben an dem Kraftfahrzeug, beispielsweise einer Rückwandtür, und auch deren Anbindung an dem jeweiligen Spoilerteil in Fertigung des Dachspoilers im Spritzprägeverfahren wesentlich stabiler und zuverlässiger ausgebildet werden können, beispielsweise auch mit höherer Materialstärke, als bei der Herstellung eines Dachspoilers im Spritzgussverfahren. Dies gilt insbesondere in Kombination mit der Bereitstellung einer optisch hochqualitativen bis praktisch fehlerfreien Oberfläche der Oberschale als Sichtfläche, wie dies erfindungsgemäß möglich ist. Es versteht sich allgemein, dass sich die oberflächliche Beschichtung der Oberschale oder allgemein die Oberflächen von Oberschale und Unterschale auf die außenseitigen Flächen des Dachspoilers beziehen.

Die Oberschale des erfindungsgemäßen Dachspoilers ist somit ein formstabiles Teil, insbesondere auch bei unter den Anwendungsbedingungen des Kraftfahrzeuges auf den Spoiler wirkenden Kräften. Dadurch ist ermöglicht bzw. gegeben, dass der Dachspoiler vorzugsweise mittels zumindest einem, mehreren oder sämtlichen der einstückig an diesem angeformten Befestigungsbereichen unmittelbar an dem Korpus der Rückwandtür (Rohbauhecktür) des Fahrzeuges befestigt ist, wobei diese Befestigung die beim Betrieb des Fahrzeuges auf den Spoiler wirkenden Kräfte aufnehmen kann. Der Korpus der Rückwandtür ist vorzugsweise einstückig ausgebildet. Damit ist es entbehrlich bzw. nicht gegeben, ein zusätzliches formstabiles Bauteil vorzusehen, welches einerseits die Spoileroberschale unterstützt und mit dieser durch Befestigungsmittel verbunden ist und andererseits an der Rückwandtür befestigt ist, was konstruktiv und vom Materialverbrauch her wesentlich aufwendiger wäre. Die Rückwandtür umfasst vorzugsweise auch eine Heckscheibe. Der formstabile Korpus der Rückwandtür erstreckt sich vorzugsweise mit einer einlagigen bzw. einwandigen Materiallage, bzw. einer Materiallage aus Metall oder faserverstärktem Kunststoff, von dem Haltebereich für die Heckscheibe bis zum Befestigungsbereich des Rückwandtürkorpus für den Dachspoiler.

Vorzugsweise weist der formstabile Korpus der Rückwandtür (Rückwandtürkorpus) umgebogene Randkanten, sich in Einbaulage quer zur Fahrzeuglängsrichtung erstreckende Querkantungen oder sich in Fahrzeuglängsrichtung erstreckende Längskantungen, Vertiefungen oder Prägungen auf, welche die Stabilität dieses Rückwandkorpus signifikant erhöhen und beliebig gestaltbar sind.

Ferner können insbesondere Vertiefungen zur Aufnahme von Bauelementen dienen, z.B. von Sensoren. können in dem Rückwandtürkorpus Vertiefungen vorgesehen sein. Diese Vertiefungen oder Absätze können aber auch ausgebildet sein zur Anlage, also Positionierung eines oder mehrerer der an der Oberschale vorgesehenen Sockels. Damit erhält die Baugruppe umfassend den Dachspoiler und korrespondierender Rückwandtürkorpus eine besondere Stabilität und lässt sich durch diese so gebildet Positionierhilfe einfach montieren.

Erfindungsgemäß sind somit die vorbestimmten Befestigungsbereiche zur Befestigung des Dachspoilers an dem Fahrzeug zumindest teilweise oder vollständig an der Oberschale angeformt, vorzugsweise einstückig angeformt. Überraschenderweise ist dies im Spritzprägeverfahren möglich, ohne zu nicht akzeptablen Oberflächenfehlern wie Sinkstellen, Einfallstellen oder andere optisch als störend wahrnehmbaren Unregelmäßigkeiten zu führen, bei zugleich hoher Festigkeit der Befestigungsbereiche und auch deren Anbindung an der Oberschale. Dies wird in Kenntnis der Erfindung darauf zurückgeführt, dass beim Prägeschritt des Spritzprägevorganges eben durch den Prägedruck etwaige Oberflächenunregelmäßigkeiten, welche ansonsten an den bzw. im Bereich der Anbindung der Befestigungsbereiche oberflächlich an der Oberschale auftreten, weitestgehend oder nahezu vollständig nivelliert werden und somit am fertig spritzgeprägten Bauteil optisch praktisch nicht mehr wahrnehmbar sind. Der Prägedruck und damit die Nivellierung können im Spritzprägeverfahren, anders als im Spritzgussverfahren, auch während der Abkühlphase des Bauteils im Formgebungswerkzeug aufrechterhalten werden. Im Gegensatz hierzu treten bei im Spritzgussverfahren hergestellten Spoilern mit Befestigungsbereichen, wenn diese an der Oberschale angeordnet sind und die für die erforderliche Stabilität und Festigkeit notwendige Materialstärke aufweisen, aufgrund der Materialschrumpfung an der Oberfläche der Oberschale als nicht akzeptable Oberflächenfehler wie z.B. Sinkstellen auf, oder die Materialstärke muss unter Beeinträchtigung der Festigkeit wesentlich reduziert werden. Durch eine nachfolgend beschriebene, erfindungsgemäße Optimierung der Befestigungsbereiche ist auch eine besonders hochqualitative Klasse A-Qualität der Oberfläche, welche praktisch keine Oberflächenfehler wie Sinkstellen, Einfallstellen oder sonstige störende Unregelmäßigkeiten aufweist, möglich. Die genannten Befestigungsbereiche sind bevorzugt nicht am Randbereich der Oberschale sondern bevorzugt beabstandet vom Randbereich vorgesehen, bevorzugt an einem mittleren und/oder zumindest im Wesentlichen ebenen oder wenig gekrümmtem Bereich der Oberschale. Die erfindungsmäßen Vorteile ergeben sich hierbei in besonderer Weise, auch da dieser Bereich besonders gut optisch wahrnehmbar ist.

Oberschale und Unterschale des Spoilers bilden die außenliegende Ober- und Unterseite des Spoilers aus, wobei die außenliegenden Oberflächen von Ober- und Unterschale Sichtflächen darstellen, welche also von einem außerhalb des Fahrzeuges befindlichem Betrachter optisch wahrnehmbar sind, was sich auf den Montagezustand des Spoilers am Fahrzeug bezieht.

Oberschale und Unterschale des Spoilers bilden mit ihren einander zugewandten Innenflächen einen Hohlraum zwischen sich aus, wobei der Hohlraum also bevorzugt durch diese beiden Innenflächen begrenzt wird. Die Innenflächen von Ober- und Unterschale sind jeweils dem Zentrum des Hohlraums zugewandt angeordnet und/oder auf der der außenliegenden Oberfläche von Ober- bzw. Unterschale gegenüberliegenden Seite angeordnet. Die Außenseite der Unterschale ist vorzugsweise vollständig auf der der Innenfläche der Oberschale abgewandten Seite angeordnet. Die Oberseite der Unterschale wird vorzugsweise nicht von der Oberschale überdeckt.

Ferner hat die erfindungsgemäße Ausbildung den Vorteil, dass die Unterschale sich nicht mehr über den Spoilerbereich erstrecken muss bzw. nicht mehr erstreckt, an welchem die Befestigungsbereiche zur Verbindung des Spoilers, bevorzugt der Spoileroberschale, mit dem Fahrzeug vorgesehen sind, und somit eine überlappende Flächenerstreckung von Ober- und Unterschale weitestgehend vermieden werden kann. Der Spoiler ist hierdurch zugleich mit deutlich geringerem Gewicht herstellbar. Die an der Oberschaleninnenfläche angeordneten Befestigungsbereiche zur Befestigung des Spoilers an dem Fahrzeug werden somit vorzugsweise nicht bei fertig zusammengesetztem Spoiler von einem Bereich der Unterschale überdeckt, was vorzugsweise für sämtliche der genannten Befestigungsbereiche gilt. Gegenüber einem herkömmlichen Dachspoiler mit separater Oberschale und Unterschale, jeweils im Spritzgussverfahren hergestellt, weist der erfindungsgemäße Dachspoiler einen um größer 10%, in der Regel um ca. 20%, geringeres Bauteilgewicht auf. Die Gewichtsreduzierung des Dachspoilerkorpus, einschließlich Wischertunnel, kann beispielsweise im Bereich von ca. 500 g je Spoiler für einen Personenkraftwagen der Mittelklasse liegen.

Der "vorbestimmte Befestigungsbereich", auch "Befestigungsbereich" genannt, des Spoilers bzw. der Oberschale sei stets als ein Befestigungsbereich zur Befestigung des Spoilers an dem Fahrzeug verstanden, sofern aus dem Zusammenhang im Einzelnen nichts anderes hervorgeht.

Die genannte "einstückige Anformung" der genannten Befestigungsbereiche an der Oberschale ist bevorzugt derart ausgebildet, dass die Anformung des jeweiligen Bereichs als Teil des Spritzprägeverfahrens zur Herstellung der Oberschale erfolgt. Die einstückige Anformung des jeweiligen Befestigungsbereichs erfolgt somit vorzugsweise durch Spritzprägen, vorzugsweise im selben Verfahrensschritt wie das Spritzprägen der Oberschale. Hierdurch ist eine besonders stabile Ausbildung des Befestigungsbereichs und auch eine besonders stabile und dauerhafte Anbindung des Befestigungsbereichs mit der Oberschale gegeben, sodass besonders hohe mechanische Kräfte aufgenommen werden können, bei zugleich sehr hoher Oberflächenqualität der Oberschalenoberfläche. Ferner werden hierdurch weitere gesonderte Verfahrensschritte außerhalb des Spritzprägewerkzeuges entbehrlich. Gegebenenfalls, weniger bevorzugt, kann eine einstückige Anformung jedoch auch durch der Spritzprägung der Oberschale nachgelagerte Verfahrensschritte, welche außerhalb des Spritzprägewerkzeuges durchführbar sind, bewerkstelligt werden. Der Befestigungsbereich, einschließlich eines Sockels desselben, besteht vorzugsweise aus demselben Material, wie auch die Oberschale.

Die Unterschale kann besonders kostengünstig als Spritzgussteil hergestellt sein, aber auch durch andere geeignete Verfahren. Die Unterschale ist bevorzugt nicht als Spritzprägeteil ausgebildet, was unter Umständen aber auch möglich ist.

Zur Herstellung der Oberschale als Spritzprägeteil kann ein Spritzprägewerkzeug eingesetzt werden, welches zumindest zwei Prägestempel aufweist, welche zwischen sich die Kavität zur Herstellung des Oberteils ausbilden. Die außenseitige Oberfläche der Oberschale wird bevorzugt durch den einen, die am Spoiler angeordnete Innenfläche der Oberschale durch den anderen Prägestempel erzeugt. Vorzugsweise werden zur Vermeidung von Oberflächenfehlern Ober- und Unterseite der Oberschale jeweils durch genau einen Prägestempel erzeugt, gegebenenfalls weniger bevorzugt Ober- und/oder Unterseite auch durch mehrere Prägestempel. Wie bei Spritzprägeverfahren üblich, wird hierbei das Bauteil ausbildende Kunststoffmaterial, insbesondere ein Thermoplast, als Schmelze in die Werkzeugkavität des Spritzprägewerkzeuges gespritzt, wobei die beiden Werkzeugteile durch einen Prägespalt voneinander getrennt sind. Anschließend werden unter Schließung des Prägespaltes die beiden Werkzeugteile aufeinander zubewegt, um den Prägevorgang auszuführen. Nachfolgend hierzu wird das Bauteil von dem Werkzeug entformt. Das Spritzprägeverfahren kann hierbei beispielsweise als großflächiges Prägen oder als partielles Prägen durchgeführt werden, wobei auch andere Spritzprägeverfahren bei Bedarf einsetzbar sind. Bei einem großflächigen Prägen besitzen die entsprechenden Werkzeuge Tauchkanten, d.h. Trennebenen, die flächig in Entformungsrichtung liegen. Bereits teilweise geschlossene Werkzeuge, deren Tauchkanten sich überdecken, sind schon soweit dicht, dass Kunststoffschmelze nicht mehr über die Trennebene entweichen kann. Beim partiellen Prägen haben die Werkzeuge vorzugsweise Standard-Trennebenen, die gut aneinander angepasst sind, wobei die Werkzeuge bewegliche Verdrängerkerne aufweisen können, die unterstützend zum Nachdruck oder auch als Nachdruckersatz die Schmelze der Kavität lokal komprimieren können. Die Hauptkompression erfolgt auch hier vorzugsweise durch das Zusammenführen der Prägestempel. Beispielsweise kann durch das Vorfahren der Verdrängerkerne Nachdruck erzeugt werden. Hierbei kann beispielsweise die Dosierung überlappend zur Nachdruckphase beginnen.

Die erfindungsgemäße Ausbildung der Oberschale als Spritzprägeteil ist an dieser auch durch geeignete Materialprüfungsverfahren nachweisbar, insbesondere in Abgrenzung zu einem durch ein Spritzgussverfahren hergestelltem Bauteil. Dies ist beispielsweise durch die Ausbildung des Bauteilbereichs, welcher im Bereich des Prägespaltes hergestellt wird, nachweisbar. So weist das spritzgeprägte Bauteil am Formungsbereich des Prägespaltes einen gewissen Grat auf, welcher der Lage der Trennlinie der Prägestempel bei geschlossenem Spritzprägewerkzeug entspricht, wobei der Grat durch den Übergang der Prägestempel ausgebildet wird. Ferner ist dies beispielsweise aufgrund von Materialspannungen in dem Bauteil und/oder dem Materialfluss am Bauteil, welcher an der Prägestempeltrennlinie angeordnet ist, nachweisbar, was insbesondere bei Verwendung von mit Füllstoffen versehenen Kunststoffmassen nachweisbar ist.

Vorzugsweise ist die Rückseite des Spoilers als Schürze ausgebildet ist, wobei die Schürze zumindest teilweise oder vollständig durch einen Randbereich der Oberschale ausgebildet ist, und wobei der Oberschalenrandbereich sich vorzugsweise hinterschneidungsfrei an den Oberschalenkorpus anschließt und/oder die Oberschale im Bereich der Oberschalenrandbereichs, welcher zumindest einen Teil der Schürze ausbildet, hinterschneidungsfrei ausgebildet ist. Die Schürze bildet bevorzugt die rückseitige Begrenzung des Dachspoilers aus, rückseitig in Bezug auf dessen Montageanordnung an dem Fahrzeug. Die hinterschneidungsfreie Ausbildung der Oberschale bezieht sich insbesondere auf einen Querschnitt der Oberschale in Fahrzeuglängsrichtung bei montiertem Spoiler, weiter insbesondere auf den Oberschalenquerschnitt im Bereich der Schürze. Der Oberschalenrandbereich, welche die Rückseitenschürze des Spoilers ausbildet, ist vorzugsweise gegenüber dem Oberschalenkorpus abgewinkelt oder abgebogen, und weist bei am Fahrzeug montiertem Spoiler in Richtung auf den Fahrzeugboden. Die Abwinkelung bzw. Abbiegung des Oberschalenrandbereichs vom Oberschalenkorpus beträgt vorzugsweise kleiner/gleich 90°, vorzugsweise 45° bis 90° oder 60° bis 90° oder 80° bis 90°, so dass der Randbereich mit dem Korpus der Oberschale keine Hinterschneidung ausbildet, so dass die Spritzprägung fertigungstechnisch einfacher ausführbar ist. Ferner ist hierdurch die Oberschale aus dem Spritzprägewerkzeug einfacher entformbar und auch Materialspannungen, welche bei ein Farbbeschichtung zu Unregelmäßigkeiten führen könnten, werden vermieden. Der zwischen dem Oberschalenrandbereich und dem Oberschalenkorpus an der Oberschaleninnenseite eingeschlossene Winkel beträgt somit vorzugsweise ≥ 90°. Die Ausbildung des Oberschalenrandbereichs als Schürze erleichtert zudem wesentlich die Befestigung der Oberschale an der Unterschale, um die Erfordernisse des Spoilers zu erfüllen. So ist durch den abgewinkelten/abgebogenen Oberschalenrandbereich zum einen der Randbereich der Oberschale stabilisiert. Zum anderen wird hierdurch ein Bauraum für bevorzugt vorgesehen Befestigungsmittel zur Festlegung der Oberschale an der Unterschale geschaffen, wie beispielsweise in Form von bevorzugt vorgesehenen Form- und/oder Kraftschlussmitteln, insbesondere Rastmitteln. Ferner weist Oberschale durch diese Ausbildung im Bereich ihres dem Fahrzeug abgewandten Endes, welcher zumindest teilweise die Schürze ausbildet, eine besonders hohe mechanische Stabilität auf.

Gegebenenfalls kann die Oberschale sich auch an dem oberen Bereich der Schürze anschließen, so dass die Schürze praktisch vollständig durch einen Bereich der Unterschale bereitgestellt wird.

Nach einer anderen Variante kann die Rückseite des Spoilers als Schürze ausgebildet sein, wobei sich der Unterschalenrandbereich hinterschneidungsfrei an den Unterschalenkorpus anschließt, wodurch dieser einfach herstellbar ist.

Vorzugsweise besteht die Oberschale aus einem einheitlichen, homogenen Material, was umfasst, dass das Material der Oberschale auch Füllstoffe aufweisen kann. Dieses erhöht zudem die Stabilität und Festigkeit der Oberschale.

Besonders vorteilhaft besteht die Oberschale zumindest im Wesentlichen oder vollständig aus einem PC/PET-Blend (Polycarbonat/Polyethylenterephthalat-Blend) als Kunststoffbasiswerkstoff. Derartige PC/PET-Blends sind bekannt. Hierdurch ist der Dachspoiler mit besonders hoher Festigkeit und zugleich mit besonders geringem Gewicht herstellbar. Ferner hat sich dieses Material auch besonders bewährt, da dieses gegenüber Sonneneinstrahlung besonders unempfindlich und formstabil ist, sodass Spannungen und/oder unerwünschten Materialverformungen bei starker Sonnenlichteinstrahlung aufgrund der Materialwahl in besonders geringem Ausmaß auftreten. Diese Vorteile sind insbesondere gegenüber ansonsten im Allgemeinen verwendeten ABS/PC-Kunststoffen gegeben.

Besonders bevorzugt ist an dem Übergangsbereich zwischen Oberschale und Unterschale bzw. der Stoßstelle derselben, einer der beiden Teile von Oberschale und Unterschale, vorzugsweise die Unterschale, mit einer geringeren Materialstärke ausgebildet, als der jeweils andere Teil. Hierdurch werden Materialspannungen am Fügebereich derselben, welche an dem Spoiler außenseitig wahrnehmbar sein könnten, insbesondere auch an einer farbigen Oberflächenbeschichtung der Oberschale, vermieden und ein besonders glatter und spaltfreier Übergang zwischen diesen ermöglicht. Dieses ist von besonderem Vorteil, wenn der Bereich der Oberschale oberflächlich farbbeschichtet ist, wobei der Unterschalenbereich eine andere oder keine oberflächliche Farbbeschichtung aufweisen kann. Die besagte "Oberfläche" mit Farbbeschichtung ist allgemein außenseitig an dem jeweiligen Bauteil angeordnet. Insbesondere im Falle der Unterschale kann aber allgemein im Rahmen der Erfindung auch das Korpusmaterial derselben eingefärbt sein, beispielsweise auch über die gesamt Materialstärke. Die Trennlinie zwischen Ober- und Unterschale ist hierbei bezogen auf die Höhenerstreckung des Spoilers bevorzugt im mittleren Bereich der Spoilerrückseite bzw. Spoilerschürze angeordnet.

Bevorzugt ist die Oberschale oberflächlich farbbeschichtet, beispielsweise um diese an die Farbe der Dachfläche des Fahrzeuges anzupassen. Allgemein bevorzugt ist die Oberschale über ihre gesamte Außenseite bzw. ihre gesamte außenseitige Oberfläche farbbeschichtet. Die Farbbeschichtung kann insbesondere ein Fahrzeuglack sein. Die Farbbeschichtung der Oberschale erfolgt bevorzugt in einem separaten Beschichtungs- bzw. Lackierungsschritt außerhalb des Spritzprägewerkzeuges. Gegebenenfalls kann die Beschichtung der Oberschale auch im Spritzprägewerkzeug oder als Teil des Spritzprägeverfahrens erfolgen.

Vorzugsweise ist die Trennlinie von Oberschale und Unterschale an der Rückseite des Spoilers angeordnet. Die besagte Trennlinie entspricht der Linie an der Außenseite des Spoilers, an welcher Ober- und Unterschale am Spoiler aneinanderstoßen. Die "Trennlinie" stellt somit eine mechanische bzw. bauliche Trennlinie zwischen Ober- und Unterschale dar. Durch diese Lage der Trennlinie kann der Spoiler besonders vorteilhaft mit spritzgeprägter Oberschale hergestellt werden.

Vorzugsweise ist die Unterschale an ihrer Außenseite nicht oberflächlich farbbeschichtet, vorzugsweise im Sinne einer zusätzlichen separaten Farbbeschichtung, wobei jedoch eine Einfärbung des Korpusmaterials der Unterschale in diesem Zusammenhang gegeben sein mag. Hierdurch ist die Herstellung des Korpus des Dachspoilers wesentlich erleichtert. Gegebenenfalls kann die Unterschale auch mit einer anderen Oberflächenbeschichtung als die Oberschale versehen sein, was eine unterschiedliche Farbbeschichtung umfasst. Eine fehlende Farbbeschichtung der Unterschale vermeidet auch Farbfehler derselben, bspw. bei deren Ausbildung mit verschiedenen Bereichen unterschiedlicher Materialstärke. Gegebenenfalls kann jedoch auch die Unterschale eine Farbbeschichtung aufweisen, unter Umständen auch in derselben Farbe wir die Oberschale.

Weisen Ober- und Unterschale verschiedene Beschichtungen und/oder Oberflächenbeschaffenheiten, insbesondere Farbbeschichtungen auf, so stellt die mechanische Trennlinie von Ober- und Unterschale, an welcher diese an der Spoileraußenseite bzw. Spoilerrückseite zusammenstoßen, bevorzugt zugleich eine Farbtrennlinie von Ober- und Unterschale dar.

Bevorzugt ist die Rückseite des Spoilers als Schürze ausgebildet, welche gegenüber der Oberschale in Richtung zum Unterschale geneigt verläuft. Der genannte abgewinkelte oder abgebogene Oberschalenrandbereich kann die Schürze in deren Höhe teilweise oder vollständig ausbilden, über einen Teil der Längserstreckung oder vorzugsweise die gesamte Längserstreckung des Spoilers, vorzugsweise ergänzend auch über die sich in Fahrzeuglängsrichtung erstreckenden Seiten des Spoilers. Die Schürzenhöhe verläuft bei am Fahrzeug montiertem Spoiler in Richtung der Fahrzeughöhe. Dies hat den Vorteil, dass hierdurch der freie Endbereich des Spoilers, welcher sich zum Fahrzeugende hin erstreckt oder dieses ausbildet, eine höhere mechanische Stabilität aufweist, welche auch beispielsweise gewünscht ist, wenn im Endbereich des Spoilers Funktionseinrichtungen wie bspw. eine Heckleuchte angeordnet sind. Durch die Schürze ist die Oberschale auch besonders zuverlässig im Spritzprägeverfahren mit den sich schließenden Prägestempeln herstellbar. Erfindungsgemäß ist an der Schürze die Trennung zwischen Ober- und Unterschale ausgebildet und somit auch die Farbtrennung zwischen der Farbgebung der Oberschale und der Farbgebung der Unterschale vorgesehen. Die bauliche Trennung von Oberschale und Unterschale entlang der Trennlinie stellt somit bevorzugt auch eine Trennlinie der Farbbeschichtung des oberen und unteren Bereichs des Dachspoilers dar. Hierdurch ist ein Korpus mit Farbbeschichtung der Oberschale besonders einfach und mit hoher optischer Güte zuverlässig herstellbar.

Nach einer Variante besonders bevorzugt ist die Trennung bzw. Farbtrennung zwischen Oberschale und Unterschale im Bereich des oder besonders bevorzugt an dem unteren Abschnitt der Schürze angeordnet, bspw. am unteren Rand der Schürze bzw. am unteren Rand der Rückseite des Spoilers. Der farbbeschichtete Bereich der Oberschale kann sich somit über den größtmöglichen Bereich des Spoilers, welcher von einer neben dem Fahrzeug stehenden Personen sichtbar ist, erstrecken. Ferner ist hierdurch die Trennlinie zwischen Oberschale und Unterschale optisch bei seitlicher Betrachtung des Fahrzeuges praktisch nicht wahrnehmbar, da bei seitlichem Blick auf das Fahrzeug der Blick nicht frontal auf die Trennlinie fällt. Ferner ist dies in Bezug auf die Anordnung und Ausbildung der Befestigungsbereiche zwischen Ober- und Unterschale besonders vorteilhaft, wie oben beschrieben.

Nach einer anderen bevorzugten Variante ist die Trennlinie zwischen Ober- und Unterschale bezogen auf die Höhenerstreckung des Spoilers im mittleren Bereich der Spoilerrückseite bzw. Spoilerschürze angeordnet.

Der erfindungsgemäße Spoiler weist bevorzugt Oberschale und Unterschale als separate Bauteile auf. Die Oberschale und die Unterschale sind durch Kraft- und/oder Formschlussmittel, insbesondere Rastmittel, zugkraftaufnehmend miteinander verbunden. Vorzugsweise sind Oberschale und Unterschale an ihrer Trennlinie spaltfrei miteinander verbunden. Die Verbindung von Ober- und Unterschale an der Trennlinie zwischen diesen ist vorzugsweise wasserdicht, ohne Einsatz zusätzlicher Dichtmittel wie Dichtlippen oder Einsatz separater Dichtmassen, aufgrund der Kraftbeaufschlagung der beiden Bauteile durch die Kraft- und/oder Formschlussmittel, insbesondere Rastmittel, aneinander. Durch die Herstellung der Oberschale als Spritzprägeteil können die Rastmittel an der Oberschale besonders stabil ausgebildet sein, auch bei nur geringem zur Verfügung stehendem Volumen, und eine sehr stabile Verbindung mit der Unterschale ausbilden, und die genannten Erfordernisse in hohem Ausmaß erfüllen. Ferner wird durch die Rastverbindung von Ober- und Unterschale ein sehr aufwendiger Fügevorgang durch ein Schweißverfahren wie bspw. Ultraschweißverfahren entbehrlich.

Die Kraft- und/oder Formschlussmittel, insbesondere Rastmittel, zur Befestigung von Ober- und Unterschale aneinander sind an der Oberschale vorzugsweise am Randbereich des Oberschalenkorpus angeordnet, bevorzugt am Randbereich an welchem Ober- und Unterschale zusammenstoßen, besonders bevorzugt benachbart oder an dem abgewinkelten oder abgebogenen Oberschalenrand, wodurch sich die genannten Vorteile in besonderer Weise ergeben. Ober- und Unterschale können hierdurch zugkraftaufnehmend aneinander festgelegt werden. Ferner kann hierdurch ein Überlappungsbereich von Ober- und Unterschale und dadurch auch das Spoilergewicht reduziert werden. Die genannten Kraft- und/oder Formschlussmittel können insbesondere an oder im Bereich der Spoilerschürze angeordnet sein. Die genannten Form- und/oder Kraftschlussmittel wie z.B. Rastmittel der Oberschale zur Befestigung von Ober- und Unterschale aneinander können einstückig an dieser angeformt sein, insbesondere auch im Spritzprägeverfahren, wodurch die Form- und/oder Kraftschlussmittel auch an einem außenseitig farbbeschichteten Bereich der Oberschale angeordnet sein können, bei sehr hoher Oberflächengüte desselben. Auch diese Ausbildung mit fehlerfreier Oberfläche der Oberschale ist durch die erfindungsgemäße Oberschale in besonderer Weise ermöglicht. Entsprechend können gegebenenfalls auch andere Halte- oder Befestigungsmittel, wie beispielsweise auch zur Befestigung des Wischertunnels, an der Oberschale angeformt sein, insbesondere einstückig im Spritzprägeverfahren angeformt sein. Auf die entsprechenden Ausführungen zu der erfindungsmäßen Ausgestaltung der Befestigungsbereiche zur Befestigung des Spoilers an dem Fahrzeug sei Bezug genommen. Die der Erfindung zugrundeliegende Problematik, insbesondere auch bezüglich der besonders hohen geforderten Stabilität der Befestigung des Spoilers an dem Fahrzeug sowie auch die geforderte Fehlerfreiheit der farbbeschichteten Oberfläche stellt sich in Bezug auf die Befestigungsbereiche zur Befestigung des Spoilers an dem Fahrzeug jedoch in wesentlich höherem Ausmaß, und ist daher nicht mit den Form- und/oder Kraftschlussmittels zur Befestigung von Ober- und Unterschale aneinander vergleichbar.

Die Unterschale kann beispielsweise als Spritzgussteil, insbesondere Kunststoffspritzgussteil, besonders kostengünstig hergestellt werden. Ober- und Unterschale können aus unterschiedlichen Werkstoffen, insbesondere unterschiedlichen Kunststoffbasiswerkstoffen, bestehen, wodurch diese Teile besonders günstig an die jeweiligen Erfordernisse anpassbar sind und der Spoiler besonders kostengünstig herstellbar ist.

Die im Rahmen der Erfindung beschriebene vorteilhafte Ausbildung der vorbestimmten Befestigungsbereiche zur Befestigung des Dachspoilers an dem Fahrzeug können für zumindest einen, mehrere oder sämtliche dieser Befestigungsbereiche des Spoilers gelten. Insbesondere können sämtliche der Befestigungsbereiche an der Oberschale des Spoilers angeordnet sein, gegebenenfalls ergänzend auch teilweise an der Unterschale. Der vorbestimmte Befestigungsbereich kann jeweils geeignete Befestigungsmittel wie Schraubbolzen, form- und/oder kraftschlüssig wirkende Befestigungselemente zumindest teilweise umfassen, mittels welcher der Dachspoilerkorpus an dem Fahrzeug, insbesondere der Fahrzeugkarosserie wie z.B. der Rückwandtür, befestigbar ist, und/oder zur Ankoppelung derartiger Befestigungsmittel dienen. Der Dachspoiler ist vorzugsweise lösbar an dem Fahrzeug befestigbar. Durch eine erfindungsgemäße Optimierung der Befestigungsbereiche, wie diese auch in den Ansprüchen und der Figurenbeschreibung beschrieben ist, ist eine besonders hohe Qualität der Oberfläche in Bezug auf die Abwesenheit von Oberflächenfehlern wie Sinkstellen, Einfallstellen oder sonstigen optisch wahrnehmbaren Unregelmäßigkeiten gegeben, bei besonders hoher Stabilität des Befestigungsbereichs und dessen Anbindung an die Oberschale. Ferner kann hierdurch die Anzahl notwendiger Befestigungsbereiche verringert werden, bei sehr stabiler Befestigung des Spoilers an dem Fahrzeug, ohne optische Beeinträchtigungen der außenseitigen Spoileroberfläche.

Der zumindest eine vorbestimmte Befestigungsbereich zur Befestigung des Spoilers an dem Fahrzeug, welcher an der Oberschale angeformt ist, umfasst einen Sockel, welcher einstückig an der Oberschale angeformt ist. Besonders bevorzugt gilt dies für mehrere oder sämtliche Befestigungsbereiche zur Befestigung des Dachspoilers an dem Fahrzeug, genauer gesagt an einer Rückwandtür desselben. Hierdurch ist eine zuverlässige, kraftaufnehmende Festlegung des Befestigungsmittels an dem Spoilerkorpus ermöglicht. Der Sockel weist eine von der Innenfläche der Oberschale beabstandete Sockeloberseite sowie eine Sockelwandung auf, welche die Sockeloberseite mit der Oberschale verbindet, wobei vorzugsweise die Sockeloberseite eine Aufnahme für ein Befestigungsmittel oder ein Befestigungsmittel zur Verbindung des Spoilers mit der Fahrzeugkarosserie aufweist. Das Befestigungsmittels kann hierdurch durch Eingriff in die Aufnahme, den Haltebereich des Sockels hintergreifen.

Vorzugsweise ist der zumindest eine Befestigungsbereich des Dachspoilers an dem Fahrzeug, insbesondere in erfindungsgemäßer Ausbildung des Befestigungsbereichs mit Sockel, in Bezug auf die Erstreckung des Dachspoilers in Fahrzeuglängsrichtung am mittleren Bereich des Dachspoilers vorgesehen. Die Erstreckung des Dachspoilers in Fahrzeuglängsrichtung entspricht im Wesentlichen der Breite des Dachspoilers. Vorzugsweise ist der zumindest eine Befestigungsbereich des Dachspoilers an dem Fahrzeug, insbesondere in erfindungsgemäßer Ausbildung des Befestigungsbereichs mit Sockel, in Bezug auf die Längserstreckung des Dachspoilers am mittleren Bereich des Dachspoilers vorgesehen, wobei die Längserstreckung des Spoilers sich in an dem Fahrzeug montierten Spoiler über die Fahrzeugbreite erstreckt. Dadurch wird der mittlere Bereich der Oberschale, welcher mit seiner großflächigen Ausbildung oftmals leichter deformierbar ist als Randbereiche der Oberschale, welche zudem oftmals versteifende Elemente wie umgebogenen Außenkanten aufweisen, durch seine Befestigung an der Rückwandtür oder Rohbauhecktür des Fahrzeuges besonders stabilisiert, auch gegenüber Einwirkung äußerer Kräfte wie bspw. auch Windkräfte bei hohen Fahrgeschwindigkeiten.

Der Korpus der Rückwandtür, der vorzugsweise Blech umfasst oder hauptsächlich aus diesem besteht, kann zur Erhöhung der Stabilität Kantungen oder Vertiefungen aufweisen, wobei Kantungen oder Rinnen eine erhöhte Längs- und/oder Quersteifigkeit der Rückwandtür realisieren und Vertiefungen eine örtliche oder Zonenweise Erhöhung der Stabilität realisieren. Ferner können Vertiefungen auch zur Aufnahme von Bauteilen dienen, z.B. in diesen eingesetzten Sensoren. Somit realisiert der einteilige, im Wesentlichen flächige Korpus der Rückwandtür (Rückwandtürkorpus) die Stabilität des Dachspoilers, so dass also die Baugruppe aus Rückwandtürkorpus und an diesem montierten Dachspoiler eine besonders stabile Baugruppe bildet.

Zusätzliche formstabile Bauteile, welche die Oberschale unterstützen und mit der Rückwandtür kraftaufnehmend verbinden sind hierdurch entbehrlich. Der mindestens eine, mehrere oder sämtliche der Befestigungsbereiche zur Befestigung des Spoilers an der Rückwandtür kann/können um ≥ 5% oder ≥ 15% oder ≥ 25% oder vorzugsweise oder ≥ 35% oder ≥ 40% bezogen auf die Ausdehnung der Oberschale in der jeweiligen Richtung deren Flächenerstreckung von dem Außenrand der Oberschale beabstandet sein.

Bevorzugt weist der Sockel eine an der Oberschale einstückig im Spitzprägeverfahren angeformte Sockelwandung auf, wobei die Wandstärke der Sockelwandung an oder im Bereich deren Anbindung an der Oberschale ≥ 40% der Materialstärke der Oberschale beträgt. Die besagte Materialstärke der Oberschale bezieht sich hierbei bevorzugt auf den Oberschalenbereich, an welchem der Sockel angeformt ist. Die Oberschale und die Sockelwandung schließen hierbei einen Winkel miteinander ein, vorzugsweise einen Winkel im Bereich von 20° bis 160° oder von 45° bis 135° oder von 60° bis 120° oder ca. 90°. Die Sockelwandung steht somit von der Oberschale ab. Die Wandstärke der Sockelwandung an oder im Bereich deren Anbindung an der Oberschale beträgt vorzugsweise ≥ 50% oder ≥ 65% oder ≥ 75% der Materialstärke der Oberschale an oder im Bereich dieser Anbindung, gegebenenfalls auch 85% oder ca. 100% oder gegebenenfalls mehr derselben. Es hat sich im Zuge der Erfindung herausgestellt, dass hierdurch einerseits eine besonders stabile Anbindung der Sockelwandung an der Oberschale erfolgen kann, welche besonders hohe Kräfte annehmen kann. Andererseits hat sich im Zuge der Erfindung herausgestellt, dass eine derartige Anbindung des Sockels bzw. der Sockelwandung an der Oberschale, welche keine sichtbaren Fehlstellen an der Oberschalenoberseite erzeugt, nur durch ein Spritzprägeverfahren erzielbar ist, nicht aber durch ein Spritzgussverfahren. Die hier genannte Wandstärke der Sockelwandung kann sich auf Teile deren Umgangserstreckung beziehen, bzw. ≥ 10% oder ≥ 25% oder vorzugsweise ≥ 50% oder ≥ 75% des Umfangs derselben oder deren gesamten Umfang. Die Umfangserstreckung der Sockelwandung kann hierbei insbesondere deren Erstreckung in einer Ebene parallel zur Hauptebene der Oberschale sein. Bei einem Spritzgussverfahren weist typischerweise die Oberschale eine ca. 3-fache Materialstärke im Vergleich zur Wandstärke der Sockelwandung im Bereich deren Anbindung an die Oberschale auf, wodurch der Sockel und damit der Befestigungsbereich nur relativ geringe Kräfte aufnehmen kann, da ansonsten sichtbare Fehlstellen an der Oberschalenoberseite entstehen.

Besonders bevorzugte Ausführungsformen des genannten vorbestimmten Befestigungsbereichs, insbesondere auch in Ausbildung als Sockel, ergeben sich aus den Ansprüchen 10 bis 23. Hierdurch kann der Sockel zum einen besonders hohe Kräfte aufnehmen, zum anderen werden hierdurch Sinkstellen, Einfallstellen oder andere optisch wahrnehmbare Oberflächenfehler an der Außenseite des Dachspoilers weiter vermindert oder vermieden, insbesondere bei Anordnung der Befestigungsbereiche an der Innenfläche einer farbbeschichteten Oberschale. Hierdurch ist bei besonders stabilen Befestigungsbereichen der Dachspoiler mit einer besonders hohen optischen Klasse A-Qualität herstellbar. Auf die entsprechenden Ausführungen und Vorteile zu den erfindungsgemäßen Ausführungsbeispielen sei verwiesen, welche allgemein im Rahmen der Erfindung gelten können.

Die Ober- und/oder Unterschale des Spoilerkorpus weisen bevorzugt weitere Befestigungsmittel und/oder Befestigungsmittelbereiche auf, um andere Funktionseinrichtungen an dem Dachspoiler zu befestigen, wie beispielsweise Sensoren, eine Heckleuchte, Warnleuchten oder dergleichen. Auch diese Befestigungsbereiche sind, können an der Oberschale vorgesehen sein und sind vorzugsweise in dem Spritzprägeverfahren an der Oberschale einstückig angeformt.

Ferner umfasst die Erfindung ein Kraftfahrzeug, insbesondere Straßenfahrzeug, im Speziellen einen Personenkraftwagen, mit erfindungsgemäßem Dachspoiler. Als Personenkraftfahrzeug seien insbesondere Straßenfahrzeuge mit einem Leergewicht von kleiner/gleich 3 t, vorzugsweise kleiner/gleich 2,5 t verstanden. Der Dachspoiler ist hierbei vorzugsweise an der Fahrzeugkarosserie, beispielsweise an der Rückwandtür des Fahrzeuges in Verlängerung der Dachfläche desselben befestigt. Der erfindungsgemäße Dachspoiler ist vorzugsweise ausgebildet, einen herkömmlichen Dachspoiler baugleich zu ersetzen, ohne hierauf beschränkt zu sein.

Der zumindest eine vorbestimmte Befestigungsbereich des Dachspoilers zur Befestigung desselben an dem Fahrzeug, welcher an der Oberschale angeformt ist, ist vorzugsweise unmittelbar an dem vorzugsweise einstückigen Korpus der Rückwandtür des Fahrzeuges befestigt. Vorzugsweise gilt dies für mehrere oder sämtliche Befestigungsbereiche des Dachspoilers zu dessen Befestigung an dem Korpus der Rückwandtür. Die Konstruktion von Rückwandtür und Spoiler ist hierdurch besonders einfach und kostengünstig und zuverlässig, da mit möglichst wenig Verbindungsstellen bzw. Fügebereichen realisierbar. Der Korpus der Rückwandtür ist hierbei ein formstabiles Bauteil bspw. aus Metall oder faserverstärktem Kunststoff. Der Rückwandtürkorpus ist vorzugsweise das strukturgebende Teil der Rückwandtür, welches die Struktur der Fahrzeugaußenhaut bestimmt. Der Korpus der Rückwandtür nimmt bevorzugt eine Heckscheibe auf. An dem Rückwandtürkorpus ist bevorzugt ein Rückwandtürschloss zum Verschließen der Rückwandtür befestigt, vorzugsweise unmittelbar an diesem befestigt. Die Heckscheibe ist vorzugsweise unmittelbar an der Rückwandtür befestigt und/oder von der Rückwandtür aufgenommen. Die Rückwandtür ist vorzugsweise gegenüber dem Fahrzeugdach und/oder den Fahrzeugseitenwänden verschwenkbar. Die Rückwandtür verschließt vorzugsweise den Fahrzeuginnenraum und/oder eine rückseitige Öffnung der Fahrzeugkarosserie zum Be- und Entladen des Fahrzeuges.

Vorzugsweise schließt sich der Dachspoiler unmittelbar an der Dachfläche bzw. dem in Verlängerung der Dachfläche angeordneten Bereich einer Rückwandtür, an, wobei der Dachspoiler mit einem Dichtungsbereich in die Dachfläche übergehen kann. Der Dichtungsbereich kann an dem Dachspoiler dauerhaft befestigt sein, beispielsweise angeklebt oder angespritzt sein. Der Dichtungsbereich kann an dem bereits spritzgeprägten Oberteil befestigt sein.

Ferner ist von der Erfindung ein Verfahren zur Herstellung eines Dachspoilers umfasst, bei welchem die Oberschale des Spoilers als Spritzprägeteil ausgebildet wird und wobei die vorbestimmten Befestigungsbereiche zur Befestigung des Dachspoilers an dem Fahrzeug zumindest teilweise oder vollständig an der Oberschale einstückig angeformt werden. Sämtliche Merkmale des Dachspoilers beziehen sich auch auf das Verfahren zur Herstellung desselben.

Die Erfindung sei nachfolgend beispielhaft beschrieben und erläutert. Sämtliche Merkmale der Ausführungsbeispiele seien unabhängig voneinander oder in Kombination miteinander auch allgemein im Rahmen der Erfindung offenbart. Es zeigen:
- Fig. 1:: eine schematische Darstellung eines Kraftfahrzeuges mit Dachspoiler,
- Fig. 2:: eine schematische Darstellung von Oberschale, Unterschale und Wischertunnel eines herkömmlichen Dachspoilers,
- Fig. 3:: eine Ansicht der Bauteile eines herkömmlichen Dachspoiler mit Oberschale, Unterschale und Wischertunnel gemäß Fig. 2,
- Fig. 4:: einen herkömmlichen Dachspoiler gemäß Figuren 2, 3 in Ansicht von unten,
- Fig. 5:: eine schematische Darstellung eines erfindungsgemäßen Dachspoilers im Querschnitt,
- Fig. 6:: eine perspektivische Darstellung eines erfindungsgemäßen Dachspoilers, beispielsweise nach Figur 5,
- Fig. 7:: einen erfindungsgemäßen Dachspoiler gemäß Figur 6 in Ansicht von unten,
- Fig. 8:: eine Detailansicht von Fig. 7 mit Dichtlippe,
- Fig. 9:: Darstellung eines herkömmlichen Befestigungsbereichs eines Dachspoilers,
- Fig. 10-12:: Darstellungen eines erfindungsgemäßen Befestigungsbereichs eines Dachspoilers in einer ersten perspektivischen Ansicht (Fig. 10), einer Draufsicht (Fig. 11) und einer zweiten perspektivischen Ansicht (Fig. 12),
- Fig. 13:: eine schematische Darstellung eines abgewandelten erfindungsgemäßen Dachspoilers im Querschnitt mit Rückwandtür des Fahrzeuges,
- Fig. 14:: eine Detailansicht der Figur 13 mit Befestigungsbereich.

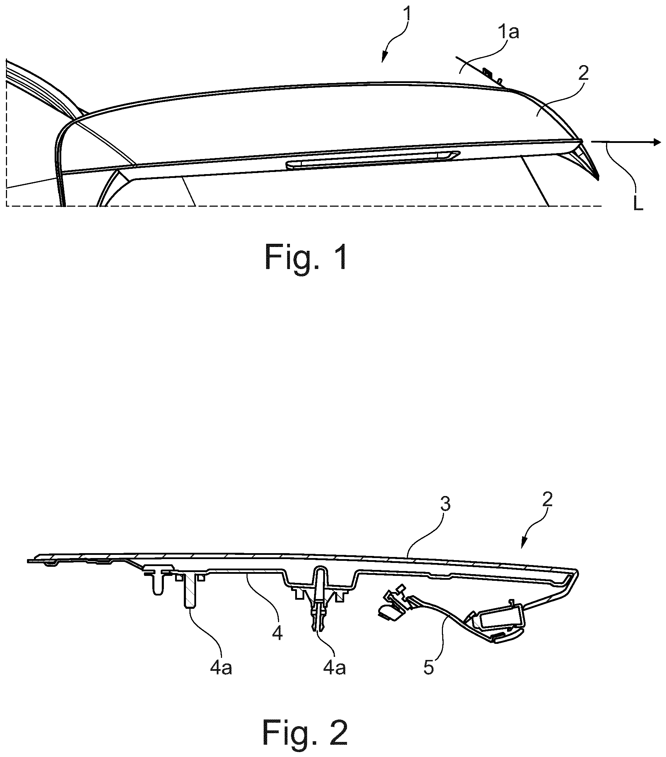

Die Figuren 1 bis 4 zeigen einen herkömmlichen Dachspoiler 2 eines Kraftfahrzeuges 1, insbesondere eines Personenkraftwagens. Der Dachspoiler 2 ist in Verlängerung der Dachfläche 1a des Kraftfahrzeuges angeordnet und schließt an dieser an. Der Dachspoiler kann an der Rückwandtür des Kraftfahrzeuges befestigt sein. Dies kann insoweit auch für den erfindungsgemäßen Spoiler gelten.

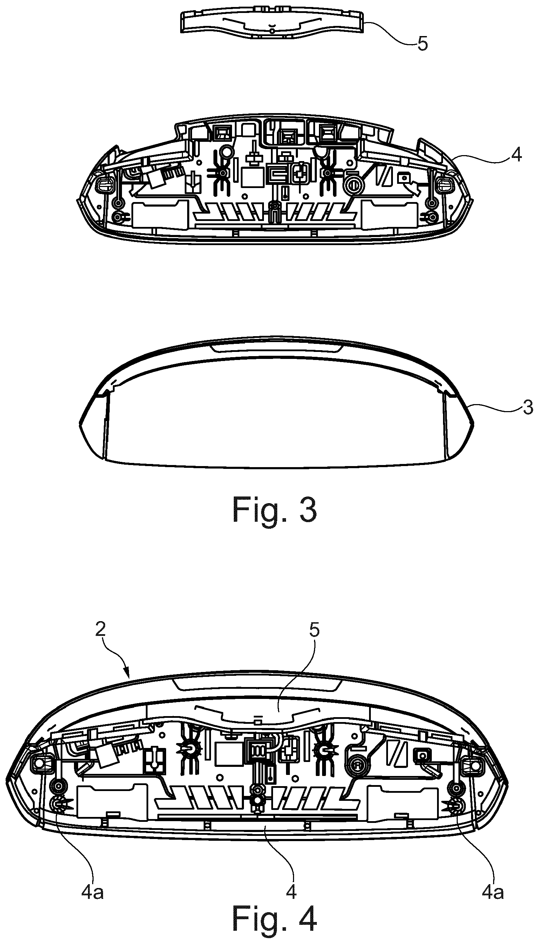

Gemäß Fig. 2, 3 umfasst der herkömmliche Dachspoiler 2 eine Oberschale 3, eine Unterschale 4 und einen Wischertunnel 5 als separate Bauteile. Die Unterschale 4 weist Befestigungsbereiche 4a zur Befestigung des Spoilers an dem Fahrzeug auf. Fig. 4 zeigt den Dachspoiler in montiertem Zustand, in welchem dieser an dem Kraftfahrzeug befestigbar ist. Nach Bestückung des Wischertunnels 5 mit den zum Betrieb des Fahrzeugwischers erforderlichen Einrichtungen wird der Wischertunnel 5 an der Unterschale 4 vormontiert. Die Oberschale 3 wird lackiert und anschließend die Unterschale 4 mit gegebenenfalls vormontiertem Wischertunnel mit der Oberschale 3 durch Verschweißung zusammengefügt, mit den in der Beschreibungseinleitung beschriebenen Nachteilen.

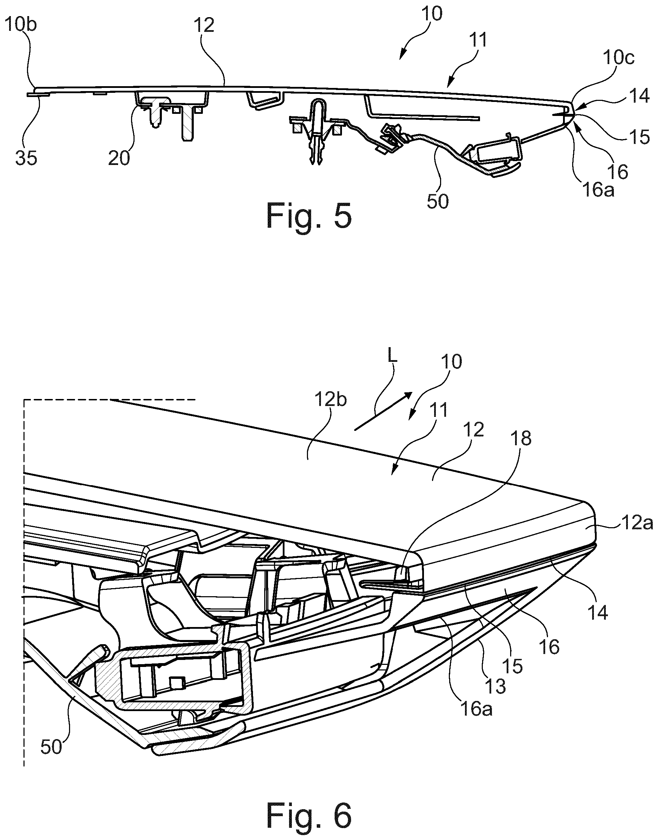

Die Figuren 5 bis 8 zeigen einen erfindungsgemäßen Dachspoiler 10 eines Kraftfahrzeuges 1, insbesondere eines Personenkraftfahrzeuges.

Der Dachspoiler 10 weist einen Korpus 11 auf, wobei der Korpus umfasst: eine Oberschale 12, welche in Befestigungsanordnung des Spoilers 10 an dem Fahrzeug 1 in Verlängerung der Fahrzeugdachfläche 1a angeordnet ist oder anordenbar ist. Vorzugsweise besteht der Spoilerkorpus aus Ober- und Unterschale 12, 13. Die Oberschale 12 ist oberflächlich mit einer Farbbeschichtung versehen, und eine Unterschale 13, welche in Befestigungsanordnung des Spoilers 10 an dem Fahrzeug 1 dem Fahrzeugboden zugewandt angeordnet ist oder anordenbar ist.

Der Dachspoiler 10 weist vorbestimmte Befestigungsbereiche 20 zur Befestigung des Spoilers 10 an dem Fahrzeug 1 auf. Der Spoiler 10 ist als langgestrecktes Bauteil mit einer Längsrichtung L (siehe auch Fig. 1) ausgebildet ist, welches sich in seiner Befestigungsanordnung an dem Fahrzeug 1 in Richtung der oder über die Fahrzeugbreite erstreckt.

Der Spoiler weit eine Vorderseite 10b auf, welche der Fahrzeugfront zugewandt am Kraftfahrzeug 1 anordenbar ist bzw. in Befestigungsanordnung an dem Fahrzeug 1 angeordnet ist, und eine Rückseite 10c auf, welche dem Fahrzeugheck zugewandt oder das Fahrzeugheck ausbildend anordenbar ist oder in Befestigungsanordnung des Spoilers an dem Fahrzeug angeordnet ist.

Oberschale 12 und Unterschale 13 sind hier als separate Bauteile hergestellt (Fig. 5,6). Die Oberschale 12 ist als Spritzprägeteil hergestellt. Die Unterschale 13 kann besonders kostengünstig als Spritzgussteil hergestellt sein, aber auch durch andere geeignete Verfahren. Oberschale 12 und Unterschale 13 sind zugkraftaufnehmend miteinander verbunden, was hier besonders vorteilhaft durch zusammenwirkende Rastmittel 18 an beiden Bauteilen erfolgt, gegebenenfalls aber auch durch andere geeignete Mittel erfolgen kann. Die Rastmittel 18 sind am Randbereich von Ober- und Unterschale 12,13 angeordnet, hier bevorzugt an dem Stoßbereich von Ober- und Unterschale aneinander, wobei dieser Stoßbereich den Rand des Spoilers an dessen Außenumfang, beispielsweise auch an der Spoilerschürze 16, ausbilden kann.

Die vorbestimmten Befestigungsbereiche 20 zur Befestigung des Dachspoilers 10 an dem Fahrzeug 1 sind zumindest teilweise, hier vollständig, an der Oberschale 12 einstückig angeformt. Die Anformung der Befestigungsbereiche 20 an der Oberschale 12 erfolgt hier während des Spritzprägevorganges zur Herstellung der Oberschale. Dies gilt hier für sämtliche der genannten Befestigungsbereiche 20. Die Befestigungsbereiche 20 sind zumindest teilweise oder vollständig beabstandet von dem Randbereich des Spoilers angeordnet, vorzugsweise beabstandet von der Spoilerschürze 16. Die Befestigungsbereich 20 sind hier bevorzugt zumindest teilweise im mittleren Bereich der Oberschale angeordnet, in welcher diese eine wesentlich geringere Krümmung aufweist, als der Randbereich, beispielsweise zumindest im Wesentlichen eben sein kann. Die Unterschale 13 erstreckt sich mit ihrer Flächenerstreckung somit nicht über einen oder mehrere oder sämtliche der Befestigungsbereiche 20, beispielsweise bei Ansicht auf die Innenseite des Spoilers zumindest im Wesentlichen senkrecht auf die Innenfläche der Oberschale im mittleren Bereich oder Zentrum (beispielsweise Schwerpunkt) derselben.

Allgemein besteht der Dachspoilerkorpus 11 in Bezug auf sein Gewicht zumindest überwiegend oder vollständig aus einem Kunststoffmaterial. Die Oberschale 12 besteht als Kunststoffbasiswerkstoff hier zumindest überwiegend oder vollständig aus einem Polycarbonat/Polyethylenterephthalat-Blend (PC/PET), was sich auch in Bezug auf die mechanische Stabilität des Spoilers bei Sonnenlichteinstrahlung bewährt hat, da der Spoiler dann geringere Formänderungen aufgrund der Bestrahlung erfährt. Die Unterschale 13 besteht zumindest im Wesentlichen oder vollständig aus einem anderen Kunststoffmaterial als die Oberschale 12.

Die Oberschale 12 ist oberflächlich farbbeschichtet, hier über deren gesamte Außenfläche. Die Farbbeschichtung erfolgt hier vorzugsweise in einem separaten Verfahrensschritt außerhalb des Spritzprägewerkzeuges, beispielsweise durch eine übliche Lackierung. Die Farbbeschichtung der Unterschale kann auf übliche geeignete Weise erfolgen, beispielsweise auch als in-mold-Beschichtung (Mold in Colour). Eine Farbtrennlinie 14 zwischen der Farbgebung der Oberschale 12 und der Farbgebung der Unterschale 13 ist an der Trennlinie 15 zwischen der Oberschale und Unterschale angeordnet, wobei an der Trennlinie 15 Ober- und Unterschale 12, 13 am fertigen Spoiler zusammenstoßen.

Die Oberschale 12 ist oberflächlich farbbeschichtet, wobei die Unterschale eine andere Farbbeschichtung oder besonders bevorzugt keine Farbbeschichtung aufweist, oder allgemein eine andere Beschichtung und/oder Oberflächenbeschaffenheit als die Oberschale 12 aufweist. Die Farbtrennlinie 14 zwischen der Farbgebung der Oberschale 12 und der Farbgebung der Unterschale 13 verläuft an der Rückseite 10c des Spoilers 10. Die Farbtrennlinie entspricht vorzugsweise der mechanischen Trennlinie 15 der beiden Bauteile.

Die Rückseite 10c des Spoilers 10 ist als Schürze 16 ausgebildet, welche gegenüber der Oberschale 12 in Richtung zur Unterschale 13 geneigt verläuft, hier in Montageanordnung des Spoilers im Wesentlichen vertikal. An der Schürze ist die genannte Farbtrennlinie 14 zwischen der Oberschale und der Unterschale angeordnet. Ober- und Unterschale stoßen somit unter Erzeugung der Trennlinie 15 im Bereich der Schürze 16 aneinander. Nach einer bevorzugten Ausführungsform ist die Farbtrennlinie 14 und/oder die Trennlinie 15 an oder im Bereich des unteren Abschnittes der Spoilerschürze 16 angeordnet, insbesondere an der Unterkante 16a der Schürze, so dass der Farbübergang bei Betrachtung des Fahrzeuges nur schwer optisch direkt wahrnehmbar ist. Alternativ, wie in Fig. 5, 6 dargestellt, kann die Farbtrennlinie 14 und/oder die Trennlinie 15 auch im mittleren Höhenbereich der Schürze angeordnet sein. An der Trennlinie 15 zwischen Ober- und Unterschale 12, 13 kann an der Korpusinnenseite eine Einschnürung (nicht dargestellt) an Ober- und/oder Unterschale 12, 13, beispielsweise an der Unterschale 13, vorgesehen sein, so dass sich der Schalenrandbereich zur Begrenzungskante desselben hin verjüngt, wodurch außenseitige Oberflächenfehler am Übergangsbereich zusätzlich vermindert werden.

Die Oberschale 12 weist einen Randbereich 12a auf, welcher gegenüber dem Korpus 12b der Oberschale 12 in Richtung zum Fahrzeugboden abgewinkelt oder abgebogen ist. Der Korpus 12b der Oberschale ist hierbei der Bereich derselben, welcher in Verlängerung der Fahrzeugdachfläche angeordnet ist. Der Korpus der Oberschale ist hier nur gering gekrümmt oder im Wesentlichen eben. Der Randbereich 12a bildet einen Teil der Schürze 16 aus und erstreckt sich zumindest über einen Teil oder die gesamte Höhe der Schürze 16. Der abgewinkelte oder abgebogene Randbereich 12a schließt in Bezug auf die Oberschaleninnenfläche mit dem Korpus der Oberschale hier einen Winkel von ≥ 90° ein, so dass der Randbereich der Oberschale in Bezug auf die Oberschaleninnenfläche hinterschneidungsfrei ist. Der Randbereich 12a ist Teil der einstückigen Oberschale, also zusammen mit dem Oberschalenkorpus 12b beim Spritzprägevorgang zur Herstellung der Oberschale mit diesem ausgeformt.

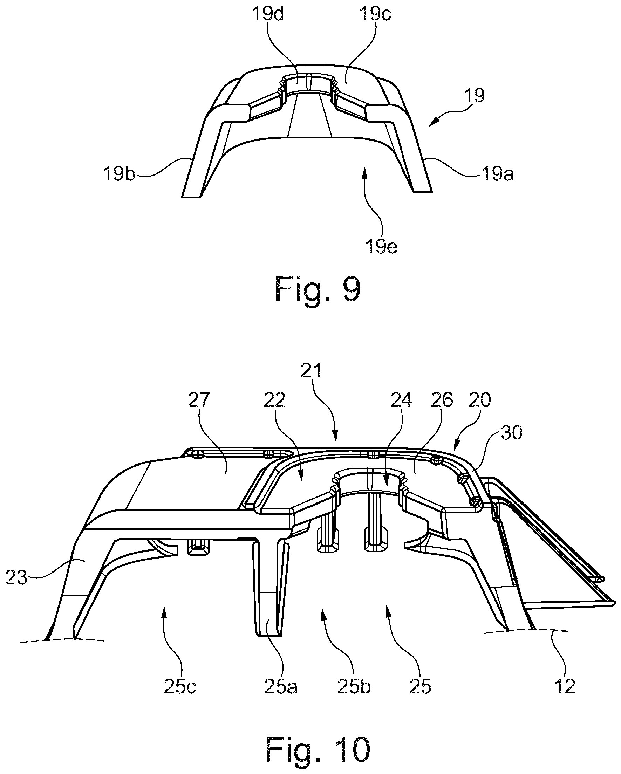

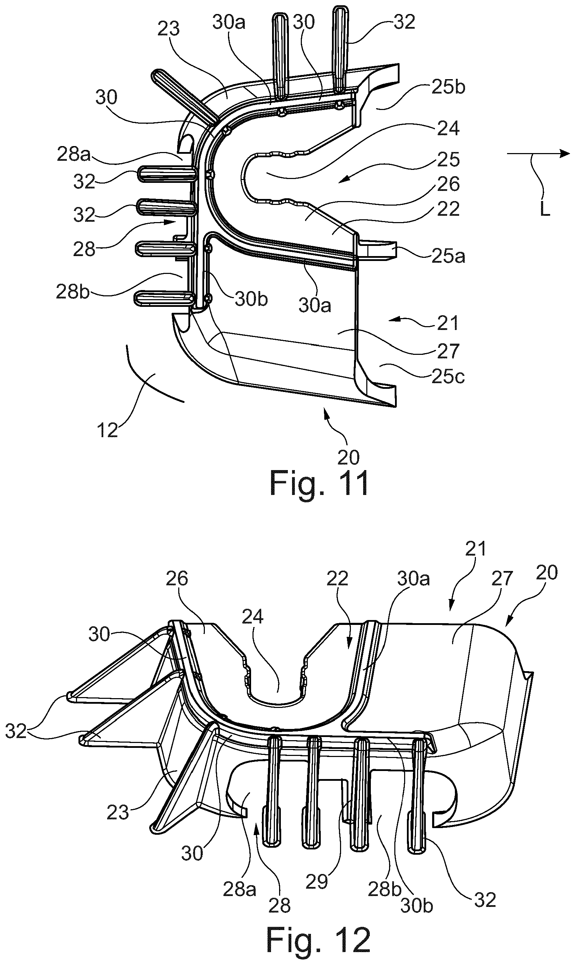

In den Figuren 5-8 sind die Befestigungsbereiche des Spoilers zur Befestigung desselben an dem Fahrzeug der Einfachheit halber in Art von herkömmlichen Befestigungsbereichen 19 (siehe Fig. 9) dargestellt, diese sind jedoch beim erfindungsgemäßen Spoiler teilweise oder vollständig wie der in Figuren 10-12 dargestellte Befestigungsbereich ausgebildet.

Figur 9 zeigt einen herkömmlichen Befestigungsbereich 19 für ein Befestigungsmittel zur Befestigung eines herkömmlichen Spoilers an dem Fahrzeug. Der Befestigungsbereich 19 weist einen Sockel 19a mit einer Sockelwandung 19b auf, welche an der Oberfläche des Bauteils angebunden ist. Die Sockeloberseite weist einen Haltebereich 19c mit einer Aufnahme 19d für ein Befestigungsmittel auf. Die Sockelwandung 19b weist eine Durchbrechung 19e auf, welche sich über den Haltebereich 19c erstreckt.

Im Folgenden wird ein vorbestimmter Befestigungsbereich 20 des Spoilers 10 zur Befestigung desselben an dem Fahrzeug 1, beispielsweise der Rückwandtür desselben, mit besonderer vorteilhafter Ausgestaltung in den Figuren 10 bis 12 beschrieben. Diese Ausführungen gelten auch allgemein im Rahmen der Erfindung. Der Befestigungsbereich 20 zur Befestigung des Dachspoilers 10 an dem Fahrzeug ist hier an der Oberschale 12 einstückig angeformt sind. Die Anformung des bzw. der Befestigungsbereiche an der Oberschale erfolgt nach einer bevorzugten Variante während des Spritzprägeverfahrens zur Herstellung der Oberschale. Die Anformung des bzw. der Befestigungsbereiche an der Oberschale erfolgt bevorzugt an der Oberschale, welche sich in dem Spritzprägewerkzeug angeordnet ist, in welchem diese hergestellt wurde, vorzugsweise vor der Entformung der Oberschale aus dem besagten Spritzprägewerkzeug. Mehrere oder sämtliche der Befestigungsbereiche 20 des Spoilers zur Befestigung des Spoilers an dem Fahrzeug können entsprechend ausgebildet sein. Mehrere oder sämtliche der Befestigungsbereiche 20 des Spoilers können an der Oberschale 12 angeordnet sein. Der Spoiler weist mehrere Befestigungsbereiche 20 auf, welche über die Fläche der Oberschale verteilt angeordnet sind. Die Befestigungsbereiche 20 sind an der Innenfläche der Oberschale 12 angeordnet.

Der Befestigungsbereich 20, welcher an der Oberschale angeformt ist, weist einen Sockel 21 auf, welcher einstückig an der Oberschale 12 angeformt ist. Der Sockel 21 weist eine von der Innenfläche der Oberschale beabstandete Sockeloberseite 22 auf, sowie eine Sockelwandung 23, welche die Sockeloberseite 22 mit der Oberschale 12 verbindet. Die Sockelwandung ist unmittelbar an der Oberschaleninnenfläche angeformt. Die Sockeloberseite weist eine Aufnahme 24 für ein Befestigungsmittel wie bzw. eine Schraube oder einen Haltestift auf oder umfasst oder ein Befestigungsmittel zur Verbindung des Spoilers 10 mit dem Fahrzeug bzw. mit der Fahrzeugkarosserie. Eine kopfförmige Verbreiterung des Befestigungsmittels kann bei Anordnung in der Ausnehmung die Sockeloberseite hintergreifen und ein Schaft des Befestigungsmittels die Aufnahme durchsetzen. Es versteht, dass allgemein das Befestigungsmittel aber auch auf andere Weise an dem Sockel zugkraftaufnehmend festlegbar sein kann. Beispielsweise kann das Befestigungsmittel auch einstückig an dem Sockel angeformt sein.

Die Sockelwandung 23 weist eine erste Durchbrechung 25 auf, welche vorzugsweise in die sockeloberseitige Aufnahme 24 für das Befestigungsmittel (nicht dargestellt) übergeht. Die Durchbrechung erstreckt sich wie hier vorzugsweise über die gesamte Sockelhöhe. Hierdurch ist das Befestigungsmittel durch die erste Durchbrechung 25 in seine Sollposition an dem Haltebereich 26 des Sockels anordenbar. Der Haltebereich 26 sichert das Befestigungsmittel zugkraftaufnehmend an dem Sockel. Der Haltebereich wird hier durch eine wulst- oder stegförmige Erhebung an der Sockeloberseite umgeben, welche eine Verstärkung 30 ausbildet, wobei auch eine anders gestaltete Versteifung des Haltebereich abschnittsweise oder durchgehend umgeben kann. Die erste Durchbrechung 25 kann sich gegebenenfalls über die gesamte Länge bzw. Erstreckungsrichtung des Sockels erstrecken. Die erste Durchbrechung 25 erstreckt sich hier über die gesamte Erstreckungsrichtung des Haltebereichs 26 des Sockels für das Befestigungsmittel. Die erste Durchbrechung 25 erstreckt sich hier praktisch über die gesamte Erstreckungsrichtung des Sockels 21, welche hier der Sockellänge entspricht, und wird nur durch einen Steg 25a unterbrochen. Der Steg 25a begrenzt den Haltebereich 26 seitlich oder ist benachbart des Haltebereichs 26 angeordnet, wobei der Steg 25a die Sockeloberseite mit der Oberschale verbindet und hierdurch den Haltebereich 26 versteift. Der Steg kann sich bis zu dem Sockelwandbereich auf der der Durchbrechung 25 gegenüberliegenden Sockelseite, vorzugsweise durchgängig, erstrecken. Durch die großflächige Öffnung der Sockelseitenwand und Größe der Durchbrechung 25 kann beim Spritzprägeverfahren ein relativ großer Schieber des Spritzprägewerkzeuges in die Durchbrechung 25 einfahren, und zwar seitlich in den Sockel, wobei der große Schieber für eine besonders effektive Kühlung beim Spritzprägevorgang sorgen kann. Auch in den Bereich zwischen der Sockelwandung und den Steg 25a kann ein Teilbereich des Schiebers einfahren. Die Durchbrechung 25 öffnet die Sockelseitenwand hinterschneidungsfrei in Bezug auf die Einschubrichtung des Schiebers.

Der Sockel 21 ist an seiner Oberseite 22 über die Befestigungsmittelaufnahme 24 hinaus plateauförmig verbreitert, unter Ausbildung des zusätzlichen Plateaus 27. Die plateauförmige Verbreiterung des Sockels erstreckts sich auch an dessen Basis bzw. Anbindung mit der Oberschale 12. Sie Seitenwandung des Sockels ist zumindest im Wesentlichen senkrecht zur Innenfläche der Oberschale 12 oder leicht geneigt, zum Sockel hin, so dass der Sockel an seiner Oberseite etwas schmaler ist. Das Plateau 27 kann ≥ 20% oder ≥ 35%, hier ≥ 50%, beispielsweise ca. der Fläche des Haltebereichs 26, hier einschließlich der Aufnahme 24, aufweisen. Hier wird die Anbindung des Sockels 21 an der Oberschale verlängert, und dadurch stabilisiert. Insbesondere wird hierdurch die Durchbrechung 25, welche sich auch unterhalb des Plateaus 27 erstreckt vergrößert. Die Oberseite des Plateaus 27 ist zumindest im Wesentlichen auf Höhe der Oberseite des Haltebereichs 26 angeordnet, was eine kompakte Bauform und erhöhte Stabilität des Sockels bedingt, aber nicht zwingend notwendig ist. Die Oberseite des Plateaus 27 ist zumindest im Wesentlichen eben und/oder parallel zur Oberseite des Haltebereichs 26, was ein verbessertes Schrumpfverhalten des Sockels beim Abkühlen nach der Spritzprägeformung ergibt und damit die Gefahr von Oberflächenfehlern an der Oberschale vermindert, aber nicht immer zwingend notwendig ist.

Die Durchbrechung 25 wird somit durch den Steg 25a in zwei Teilbereiche 25b,25c unterteilt, einen Teilbereich 25b auf Höhe des Haltebereichs 26 und einen Teilbereich 25c auf Höhe des Plateaus 27. Der eine und/oder andere Teilbereich 25b,25c erstrecken sich bis zur inneren Oberfläche der Oberschale 12.

Durch die große Erstreckung der Durchbrechung 25 auch im Bereich des Plateaus 27, hier praktisch über die gesamte Sockelerstreckung bzw. Sockellänge, kann auch der in die Durchbrechung eingeführte Schieber sehr groß bemessen sein und eine entsprechend große Kühlleistung aufweisen. Hierdurch werden Oberflächenfehler auf der Oberschalenaußenseite, welche ansonsten aufgrund der Anbindung des Sockels an der Oberschale auftreten könnten, wesentlich vermindert oder vermieden.

Allgemein ist bevorzugt in dem Übergangsbereich zwischen der plateauförmigen Sockelverbreiterung 27 und der Befestigungsmittelaufnahme 24 bzw. dem Haltebereich 26 auf der Sockelseite, in welcher die Befestigungsmittelaufnahme mündet, die Sockeloberseite mit einem Steg 31 an der Oberschale einstückig angeformt. Hierdurch werden die Anbindung des Sockels 21 an der Oberschale 12 und auch der Haltebereich 26 stabilisiert, und andere Anbindungsbereiche des Sockels an der Oberschale 12 bei Krafteinwirkung auf den Haltebereich entlastet. Hierdurch werden - auch zeitweilige - Deformationen an der Oberfläche der Oberschale vermindert und die Oberflächenqualität erhöht.

Die Sockelwandung 23 weist zumindest einen oder mehrere materialgeschwächte Bereiche 28 auf, welche von der Befestigungsmittelaufnahme an der Sockeloberseite jeweils durch einen vorzugsweise formstabilen Sockelbereich getrennt ist/sind. Der materialgeschwächte Bereich ist hier als zweite Durchbrechung ausgebildet, er kann gegebenenfalls auch als Film oder Wandungsbereich mit geringer Wandstärke ausgebildet sein. Neben dem ersten materialgeschwächten Bereich 28a auf Höhe des Haltebereichs 26 ist auch auf Höhe des Plateaus 27 ein zweiter materialgeschwächter Bereich 28b vorgesehen. Zumindest einer oder mehrere, vorzugsweise sämtliche der materialgeschwächten Bereiche 28 erstrecken sich bis nahezu zur oder bis zur inneren Oberfläche der Oberschale. Durch den zumindest einen materialgeschwächten Bereich 28 bzw. die Bereiche 28a,28b weist der Sockel eine erhöhte Flexibilität auf, was ein Ausreißen des Befestigungsmittels bei hoher Kraftbeaufschlagung vermindert. Ferner wird durch den materialgeschwächten Bereich die Schrumpfung des Sockels bei Abkühlen nach dem Spritzprägen und Materialspannungen an der Anbindung des Sockels an der Oberschale vermindert, und hierdurch Oberflächenfehler an der Außenseite der Oberschale vermindert.

Der materialgeschwächte 28 Bereich bzw. die mit dem zumindest einen materialgeschwächten Bereich versehene Sockelwandung 22 erstreckt sich quer oder zumindest im Wesentlichen senkrecht zur Längsrichtung L des Spoilers 11. Die Längsrichtung des Spoilers entspricht der Hauptschrumpfrichtung desselben beim Abkühlen nach dem Spritzprägevorgang. Durch diese Ausrichtung des materialgeschwächten Bereichs 28 zur Hauptschrumpfrichtung werden Materialspannungen an der Oberschalenaußenseite vermindert, um die Oberflächenqualität weiter zu verbessern. Die Fläche des materialgeschwächten Bereichs 28 bzw. der mit diesem versehene Bereich der Sockelwandung 22 kann sich vorzugsweise in einem Winkel von 45° bis 135°, vorzugsweise 60° bis 120° oder 75° bis 105°, besonders bevorzugt ca. 90° zur Längsrichtung L des Spoilers 11 erstrecken.

Die Sockelwandung 22 weist hier an einem in Sockelumfangsrichtung verlaufenden Wandungsabschnitt mehrere benachbarte materialgeschwächte Bereiche 28a,28b auf. Dieser Wandabschnitt ist hier zumindest im Wesentlichen senkrecht oder quer, vorzugsweise in einem Winkel von ≥ 45°, vorzugsweise ≥ 60°, zur Längsrichtung des Spoilers angeordnet. Die Bereiche 28a,28b sind durch einen Steg 29 getrennt, welcher an der Innenfläche der Oberschale und am oberen Sockelbereich angeformt ist und die Sockelwandung stabilisert. Dieser Steg 29 kann ein Teilbereich des Steges 25a sein oder ein separater Steg. Der Steg 29 ist am Randbereich des Haltebereichs 26 angeordnet.

Gegebenenfalls können der Durchbrechungsbereich 25a und der materialgeschwächte Bereich 28b, welche beide auf Höhe des Plateaus 27 angeordnet sind, auch an dem jeweils gegenüberliegenden Seitenwandabschnitt 22 angeordnet sein, also vertauscht zueinander.

Zwischen der plateauförmigen Verbreiterung 27 des Sockels 21 und der Befestigungsmittelaufnahme 24 bzw. dem Haltebereich 26 des Sockels ist die Sockeloberseite mit einer Verstärkung 30 versehen. Die Verstärkung ist hier als wulstförmige Erhebung oder Steg ausgebildet, es sind jedoch auch anders gestaltete Versteifungen, insbesondere in steg- oder rippenform möglich. Die Verstärkung 30 erstreckt sich mit einem Teilbereich 30a um den Haltebereich 26 des Sockels, hier vollständig um diesen herum. Der Verstärkung 30 erstreckt sich mit einem Teilbereich 30b zudem über die den Randbereich des Plateaus 27, wobei der Bereich 30a vorzugsweise wie hier an dem Bereich 30 einstückig angeformt ist. Gegebenenfalls kann der Randbereich des Plateaus 27 auch durch eine zusätzliche Versteifung stabilisiert sein, welche sich vorzugsweise zumindest teilweise um das Plateau herum erstreckt. Gegebenenfalls, weniger bevorzugt, kann die Verstärkung auch Unterbrechungen aufweisen. Die Verstärkung ist am Randbereich des Sockels angeordnet. Die Verstärkung versteift die Sockeloberseite. Ferner bildet die Verstärkung 30, insbesondere bei Anordnung am Rand des Haltebereichs 26 und/oder benachbart oder auf Höhe der Sockelwandung 22, eine Entkoppelung der Kraftübertragung vom Haltebereich 26 in die Sockelwandung und damit deren Anbindung an die Oberschale dar, wodurch optische Beeinträchtigungen an der Oberschalenaußenseite insbesondere auch bei Kraftausübung auf den Spoiler vermindert werden.

Die Sockelwandung 22 ist mit zumindest einem oder mehreren einstückig angeformten Versteifungsrippen 32 mit der Oberschale verbunden. Die Versteifungsrippe(n) 32 ist/sind an Sockel, hier bevorzugt der Sockelwandung 22, und an der Oberschale 12 einstückig angeformt. Die Versteifungsrippen erstrecken sich über den größten Teil der Sockelhöhe, hier bis zur Sockeloberseite. Mehrere Versteifungsrippen 32 sind um den Sockelumfang verteilt angeordnet. Die Rippen 32, hier mehrere, sind an dem Bereich der Sockelwandung angeordnet, welche den Haltebereich 26 umgibt. Es sind Rippen 32 auf Höhe des materialgeschwächten Bereichs 28 bzw. der Teilbereiche 28a,28b angeordnet, wobei die Rippen mit einem materialgeschwächten Bereich in Form eines Films oder dünnen Wandung nicht verbunden sein müssen. Zumindest eine oder mehrere Rippen sind an der Sockelwandung, welche das Plateau 27 umgibt, angeordnet, insbesondere an dem Wandungsbereich 22a, welcher sich an den Haltebereich 26 anschließt oder benachbart zu diesem ist. Die Rippen weisen eine breite Basis auf und verjüngen sich zur Sockeloberseite hin. Durch die Rippen 32 wird der Sockel wesentlich stabilisiert und bei Ausübung von Kräften auf den Haltebereich 26, beispielsweise aufgrund von äußeren Krafteinwirkungen auf den am Fahrzeug montierten Spoiler, die Kräfte über größere Anbindungsbereiche des Sockels 21 an der Oberschale übertragen, so dass Materialspannung oder auch nur temporäre Deformationen an der Oberschalenoberseite, vermindert oder vermieden werden. Temporäre oder ggf. auch dauerhafte Beeinträchtigungen der Oberflächenqualität der Oberschale werden so vermindert oder vermieden.

Die Sockeloberseite ist mit einer Versteifung 30 versehen, welche hier steg- oder wulstförmig ausgebildet ist, und welche sich vorzugsweise zumindest teilweise um die Befestigungsmittelaufnahme herum erstreckt. Die Verstärkungsrippen 32 der Sockelwandung sind an der Versteifung 30 der Sockeloberseite angebunden, und wie hier bevorzugt an den Teilbereichen 30a und 30b derselben. Hierdurch ergeben sich die zuvor beschriebenen Vorteile in besonderer Weise.

Ferner umfasst der Dachspoiler 10 einen Wischertunnel 50 zur Aufnahme eines Fahrzeugwischers, wobei der Wischertunnel als separates Bauteil, beispielsweise Kunststoffspritzgussbauteil ausgebildet sein kann.

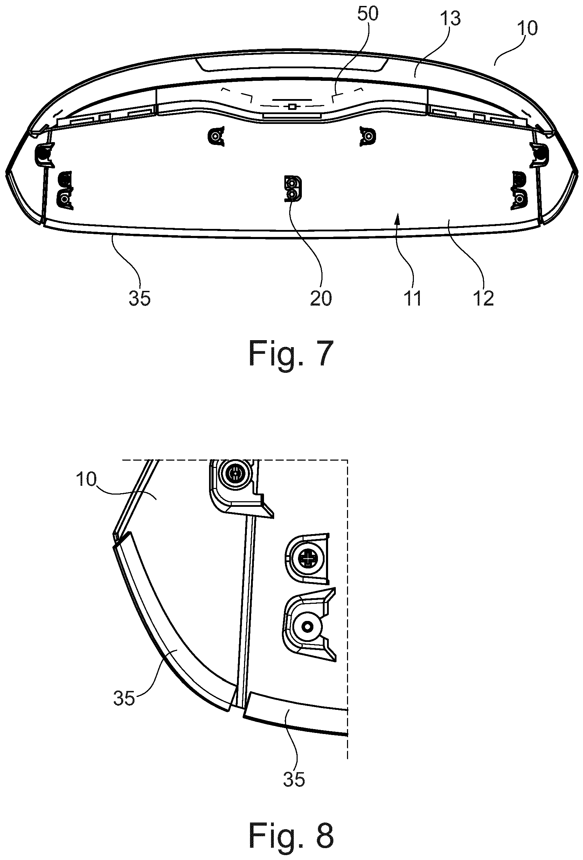

An dem Spoiler, insbesondere an der Oberschale desselben, ist eine Dichtung 35 zum Anschluss an das Fahrzeugdach und/oder eine Fahrzeugrückwandtür befestigt, vorzugsweise dauerhaft befestigt (Fig. 7,8). Die Dichtung 35 kann an der bereits spritzgeprägten Oberschale nachträglich befestigt werden.

Aus der obigen Beschreibung ergeben sich auch die entsprechenden Verfahrensschritte zur Herstellung des erfindungsgemäßen Dachspoilers.

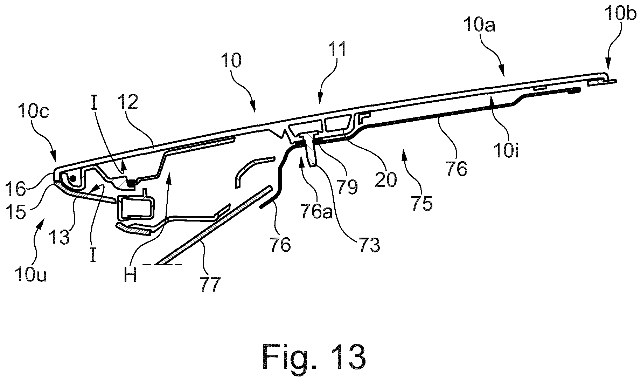

Figur 13 zeigt eine schematische Darstellung eines abgewandelten erfindungsgemäßen Dachspoilers 10 im Querschnitt mit Rückwandtür 75 (teilweise dargestellt) des Fahrzeuges. Auf sämtliche andere Figuren und deren Beschreibung, insbesondere auch Figur 5, sei Bezug genommen, sofern diese den folgenden Ausführungen nicht widersprechen. Die Rückwandtür (Rohbauhecktür) 75 weist einen formstabilen Korpus 76 als tragendes Bauteil der Rückwandtür auf. Der Rückwandtürkorpus ist hier und allgemein im Rahmen der Erfindung bevorzugt als einstückiges Formteil ausgebildet. Der Rückwandtürkorpus 76 bestimmt die mechanische Stabilität der Rückwandtür zumindest im Wesentlichen oder praktisch vollständig oder vollständig, gegebenenfalls abgesehen von oder zusammen mit einem Beitrag der Heckscheibe zur Stabilität der Rückwandtür. Hierzu weist der Korpus 76 der Rückwandtür 75 in Fahrzeuglängsrichtung zwei nach hinten zum Fahrzeugheck hintereinander ausgebildete und sich quer zur Fahrzeuglängsachse erstreckende Querabsätze auf, so dass einen oberen Vorderabschnitt Abschnitt gebildet wird, auf dem der Dachspoiler 10 vorzugsweise unter Zwischenschaltung von Schaum aufliegt und dessen vorderseitiges Stirnende um 180 umgebogen ist zur Bildung einer Stirnfalz. Nach dem Vorderabschnitt geht der Korpus 76 über einen ersten, hier oberen Querabsatz in einen längeren Mittelabschnitt über, der also tiefer liegt als der Vorderabschnitt. Vor dem mittleren Befestigungsbereich 20 geht der Korpus 76 der Rückwandtür 75 sodann mit einem zweiten Querabsatz in einem kürzeren Hinterabschnitt über. Am hinteren Ende geht der Korpus 76 sodann nach unten in ein Fensterauflage über, auf der das Fenster 77 aufliegt. Die Rückwandtür 75 weist somit vorzugsweise eine Heckscheibe 77 auf.

Die Oberschale ist als formstabiles Teil ausgebildet. Dieses wird vorliegend insbesondere durch die Stirnfalz und die beiden Querabsätze realisiert.

Der zweite - hier untere - Querabsatz dient ferner als Anschlag für den als Sockel 21 ausgebildeten Befestigungsbereiche 20.

Oberschale 12 und Unterschale 13 des Spoilers bilden die außenliegende Ober- und Unterseite 10o,10u des Spoilers aus, wobei die außenliegenden Oberflächen von Ober- und Unterschale Sichtflächen darstellen.

Oberschale 12 und Unterschale 13 des Spoilers bilden mit ihren einander zugewandten Innenflächen I einen Hohlraum H zwischen sich aus, welcher durch diese beiden Innenflächen begrenzt wird, wobei die Innenflächen I dem Zentrum des Hohlraums zugewandt angeordnet sind. Die Außenseite, d.h. Sichtfläche, der Unterschale ist vollständig auf der der Innenfläche der Oberschale abgewandten Seite angeordnet. Die Oberschale ist im Bereich der Oberschalenrandbereichs, welcher zumindest einen Teil der Schürze ausbildet, hinterschneidungsfrei ausgebildet. Die Schürze 16 bildet die rückseitige Begrenzung des Dachspoilers aus. Die Unterschale 13 ist im Bereich des Unterschalenrandbereichs, welcher zumindest einen Teil der Schürze ausbildet, hinterschneidungsfrei ausgebildet. Die Hinterschneidungsfreiheit von Ober- und/oder Unterschale bezieht sich jeweils unabhängig voneinander auf einen Querschnitt derselben in Fahrzeuglängsrichtung bei montiertem Spoiler.

Der Befestigungsbereich 20 des Dachspoilers zur Befestigung desselben an dem Fahrzeug ist in Bezug auf die Längserstreckung des Dachspoilers in Fahrzeuglängsrichtung am mittleren Bereich M des Dachspoilers 10 vorgesehen. Der Befestigungsbereich kann wie in den Figuren 9-12 beispielhaft dargestellt ausgebildet sein. Der mindestens eine, hier sämtliche, der Befestigungsbereiche 20 zur Befestigung des Spoilers an der Rückwandtür sind ≥ 15%, hier genauer gesagt ≥ 40%, bezogen auf die Ausdehnung der Oberschale in der jeweiligen Richtung deren Flächenerstreckung von dem Außenrand der Oberschale beabstandet.

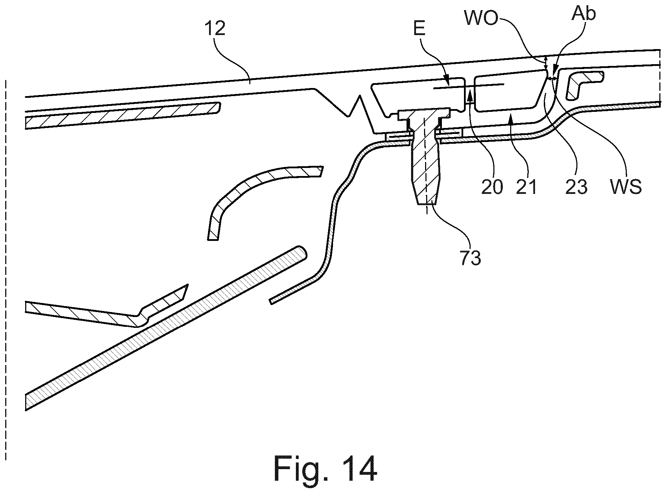

Der Sockel 21 des Befestigungsbereichs 20 weist eine an der Oberschale einstückig im Spitzprägeverfahren angeformte Sockelwandung 23 auf (siehe Fig. 14). Die Wandstärke WS der Sockelwandung an deren Anbindung an der Oberschale 12, ggf. auch im Bereich der Anbindung Ab, beträgt ≥ 40% der Materialstärke WO der Oberschale an der besagten Anbindung Ab, hier ca. 100% derselben, so dass Sockelwandung und Oberschale im Bereich deren Anbindung aneinander im Wesentlichen dieselbe Wandstärke aufweisen. Die besagte Materialstärke WO der Oberschale bezieht sich hierbei auf den Oberschalenbereich, an welchem der Sockel angeformt ist. Die genannte Wandstärke WS der Sockelwandung erstreckt sich zumindest im Wesentlichen um den gesamten Sockelumfang. Die Umfangserstreckung der Sockelwandung entspricht hierbei deren Erstreckung in einer Ebene E parallel zur Hauptebene der Oberschale.

Der an der Oberschale angeformte zumindest eine Befestigungsbereich 20 des Dachspoilers zur Befestigung desselben an dem Fahrzeug ist unmittelbar an dem Korpus der Rückwandtür des Fahrzeuges befestigt. Dies gilt hier für mehrere oder sämtliche Befestigungsbereiche des Dachspoilers zur Befestigung desselben an dem Fahrzeug. Für die Befestigung sind entsprechende Befestigungsmittel 73 wie z.B. Haltestifte oder Schraube vorgesehen, welche hier formschlüssig und/oder kraftschlüssig, ggf. auch stoffschlüssig, mit der Rückwandtür zusammenwirken, um den Dachspoiler an der Rückwandtür, genauer gesagt dem Korpus derselben, zu befestigen. Der Befestigungsbereich des Spoilers ist an einem formstabilen Abschnitt der Rückwandtür befestigt. Zwischen dem Befestigungsbereich und der Rückwandtür ist hier ein Zwischenstück 79 angeordnet, welches jedoch nur als Polster und/oder Abstandshalter dient und keine strukturstabilisierende Funktion hat.

Der formstabile Rückwandtürkorpus 76 erstreckt sich hier mit einer einlagigen bzw. einwandigen Materiallage, bzw. einer Materiallage aus Metall oder faserverstärktem Kunststoff, durchgehenden von dem Haltebereich für die Heckscheibe 77 bis zum Befestigungsbereich 76a des Rückwandtürkorpus für den Dachspoiler 10.

Hierzu weist der Korpus 76 der Rückwandtür 75 in Fahrzeuglängsrichtung zwei nach hinten zum Fahrzeugheck verlaufende Absätze auf, so dass dieser einen oberen Vorderabschnitt umfasst, auf dem der Dachspoiler 10 vorzugsweise unter Zwischenschaltung von Schaum aufliegt und dessen vorderseitiges Stirnende um 180 Grad umgebogen ist zur Bildung einer Stirnfalz. Nach dem Vorderabschnitt geht der Korpus 76 über einen ersten Absatz in einen längeren Mittelabschnitt über, der tiefer liegt als die Ebene des Vorderabschnitts. Am Ende des Mittelabschnitts geht der Korpus 76 vor dem mittleren Sockel 21 des Befestigungsbereichs 20 in einen Hinterabschnitt über, der gegenüber der Ebene des Mittelabschnitts über den zweiten Absatz nach unten versetzt ist und in dem der Sockel 21 sitzt, der also zur Aufnahme des Sockels ausgebildet ist. Schließlich geht der Korpus 76 nach diesem Hinterabschnitt nach untern über in ein Scheibenauflager, auf welchem das Vorderende der Heckscheibe 77 aufliegt.

Vorzugsweise ist zwischen den aneinander anliegenden Fügepartnern Schaum angeordnet, um bei Druckausübung auf ein Teil Spannungen und insbesondere Knack- oder Knarrgeräusche durch die Relativbewegung der Teile der Baugruppe bei Druckbeanspruchung der Oberschale zu unterbinden. Insbesondere ist Schaum angeordnet zwischen der Unterschale 12, 13 und der Scheibe 77 und zwischen der dem Vorderabschnitt des Korpus 76 und dem Spoiler 10 sowie auch zwischen der Vorderseite 10b des Dachspoilers 10 und dem Korpus 76 der Rückwandtür 75.

Nach den Ausführungsbeispielen und allgemein im Rahmen der Erfindung bevorzugt erstreckt sich der Rückwandtürkorpus nur einwandig über ≥ 5% oder ≥ 10% oder ≥ 15%, vorzugsweise über ≥ 25% oder ≥ 35%, weiter bevorzugt ≥ 50% der Flächenerstreckung der Oberschale. Die Flächenerstreckung der Oberschale bemisst sich in ihrer Länge als der Abstand der in Längsrichtung der Oberschale am weitesten entfernten Punkte der Oberschale mit geradliniger Verbindungslinie der besagten Punkte. Die Flächenerstreckung der Oberschale bemisst sich in ihrer Breite als der Abstand der in Breitenrichtung der Oberschale am weitesten entfernten Punkte der Oberschale mit geradliniger Verbindungslinie der besagten Punkte. Dies ist durch die Bereitstellung der formstabilen Oberschale als Spritzprägeteil ermöglicht. "Einwandig" heißt hierbei insbesondere, dass nicht zwei oder mehr formstabile und/oder Verstärkungslagen übereinander angeordnet sind, welche gegebenenfalls auch einen Hohlraum zwischen sich einschließen können. "Übereinander" bezieht sich hierbei auf eine Richtung senkrecht zur Oberfläche der Oberschale an dem jeweiligen Punkt der Oberfläche der Oberschale.

Die Heckscheibe 77 ist hier unmittelbar an dem Korpus 76 der Rückwandtür 75 befestigt und/oder von der Rückwandtür aufgenommen. Der Rückwandtürkorpus 76 umgibt die Heckscheibe 77 um deren gesamten Umfang mit einem einstückigem und vorzugsweise einwandigem Korpusbereich.

Nach den Ausführungsbeispielen und allgemein im Rahmen der Erfindung bevorzugt erstreckt sich der Rückwandtürkorpus nur einwandig über ≥ 5% oder ≥ 10% oder ≥ 15%, vorzugsweise über ≥ 25% oder ≥ 35%, weiter bevorzugt ≥ 50% der Flächenerstreckung der Oberschale. Die Flächenerstreckung der Oberschale bemisst sich in ihrer Länge als der Abstand der in Längsrichtung der Oberschale am weitesten entfernten Punkte der Oberschale mit geradliniger Verbindungslinie der besagten Punkte. Die Flächenerstreckung der Oberschale bemisst sich in ihrer Breite als der Abstand der in Breitenrichtung der Oberschale am weitesten entfernten Punkte der Oberschale mit geradliniger Verbindungslinie der besagten Punkte. Dies ist durch die Bereitstellung der formstabilen Oberschale als Spritzprägeteil ermöglicht. "Einwandig" heißt hierbei insbesondere, dass nicht zwei oder mehr formstabile und/oder Verstärkungslagen übereinander angeordnet sind, welche gegebenenfalls auch einen Hohlraum zwischen sich einschließen können. "Übereinander" bezieht sich hierbei auf eine Richtung senkrecht zur Oberfläche der Oberschale an dem jeweiligen Punkt der Oberfläche der Oberschale.

Die Heckscheibe 77 ist hier unmittelbar an dem Korpus 76 der Rückwandtür 75 befestigt und/oder von der Rückwandtür aufgenommen. Der Rückwandtürkorpus 76 umgibt die Heckscheibe 77 um deren gesamten Umfang mit einem einstückigem und vorzugsweise einwandigem Korpusbereich.

## Patentansprüche

1. Dachspoiler (10) eines Kraftfahrzeuges, insbesondere eines Personenkraftfahrzeuges, wobei der Dachspoiler einen Korpus aufweist, wobei der Korpus umfasst:
- eine Oberschale (12), welche in Befestigungsanordnung des Dachspoilers (10) an dem Fahrzeug in Verlängerung einer Fahrzeugdachfläche angeordnet ist oder anordenbar ist und welche oberflächlich mit einer Farbbeschichtung versehen ist, und
- eine Unterschale (13), welche in Befestigungsanordnung des Dachspoilers (10) an dem Fahrzeug dem Fahrzeugboden zugewandt angeordnet ist oder anordenbar ist,
wobei der Dachspoiler (10) vorbestimmte Befestigungsbereiche (20) zur Befestigung desselben an dem Fahrzeug aufweist,
wobei der Dachspoiler (10) als langgestrecktes Bauteil mit einer Längsrichtung ausgebildet ist, welches sich in seiner Befestigungsanordnung an dem Fahrzeug in Richtung der oder über die Fahrzeugbreite erstreckt,
wobei der Dachspoiler (10) eine Vorderseite aufweist, welche der Fahrzeugfront zugewandt am Kraftfahrzeug anordenbar ist bzw. in Befestigungsanordnung an dem Fahrzeug angeordnet ist,
und wobei der Dachspoiler (10) eine Rückseite aufweist, welche dem Fahrzeugheck zugewandt oder das Fahrzeugheck ausbildend anordenbar ist oder in Befestigungsanordnung des Dachspoilers (10) an dem Fahrzeug angeordnet ist,
wobei die vorbestimmten Befestigungsbereiche (20) zur Befestigung des Dachspoilers (10) an dem Fahrzeug zumindest teilweise oder vollständig an der Oberschale (12) einstückig angeformt sind,
wobei die Oberschale (12) und die Unterschale (13) durch Rastmittel (18) und/oder Formschlussmittel zugkraftaufnehmend miteinander verbunden sind,
und wobei der zumindest eine vorbestimmte Befestigungsbereich (20) zur Befestigung des Dachspoilers (10) an dem Fahrzeug, welcher an der Oberschale (12) angeformt ist, einen Sockel (21) umfasst, welcher einstückig an der Oberschale (3) angeformt ist,
**dadurch gekennzeichnet,**
**dass** die Oberschale (3) des Dachspoilers (2) als Spritzprägeteil ausgebildet ist und
**dass** eine Sockelwandung (23) zumindest einen oder mehrere materialgeschwächte Bereiche (28) aufweist, welche von der Befestigungsmittelaufnahme (24) an der Sockeloberseite (22) durch einen vorzugsweise zumindest im Wesentlichen formstabilen Sockelbereich getrennt ist.

2. Dachpoiler (10) nach Anspruch 1, **dadurch**
**gekennzeichnet , dass** die Rückseite des Spoilers als Schürze (16) ausgebildet ist, dass die Schürze zumindest teilweise durch einen Randbereich der Oberschale (3) ausgebildet ist, und dass der Oberschalenrandbereich sich hinterschneidungsfrei an den Oberschalenkorpus anschließt.

3. Dachspoiler (10) nach Anspruch 1 oder 2, **dadurch gekenn- zeichnet**, dass die Rückseite des Dachspoilers (10) als Schürze (16) ausgebildet ist, und dass der Unterschalenrandbereich sich hinterschneidungsfrei an den Unterschalenkorpus anschließt.

4. Dachspoiler (10) nach einem der Ansprüche 1 bis 3, **dadurch gekennzeichnet, dass** die Oberschale (12) oberflächlich farbbeschichtet ist und dass eine Farbtrennlinie zwischen der Farbgebung der Oberschale (12) und der Farbgebung der Unterschale am Übergang zwischen Oberschale (12) und Unterschale angeordnet ist.

5. Dachspoiler (10) nach einem der Ansprüche 1 bis 4, **dadurch gekennzeichnet, dass** die Oberschale (12) oberflächlich farbbeschichtet ist und dass eine Trennlinie zwischen der Oberschale (12) und der Unterschale (13) an der Rückseite des Dachspoilers (10) verläuft.

6. Dachspoiler (10) nach Anspruch 1 bis 5, **dadurch gekenn- zeichnet**, dass der Sockel (21) eine von der Innenfläche der Oberschale (12) beabstandete Sockeloberseite (22) aufweist, sowie eine Sockelwandung (23), welche die Sockeloberseite (22) mit der Oberschale (12) verbindet, und dass vorzugsweise die Sockeloberseite (22) eine Aufnahme (24) für ein Befestigungsmittel oder ein Befestigungsmittel zur Verbindung des Dachspoilers (10) mit der Fahrzeugkarosserie aufweist.

7. Dachspoiler (10) nach einem der Ansprüche 1 bis 6, **dadurch gekennzeichnet, dass** die Sockelwandung (23) des Sockels (21) eine erste Durchbrechung (25) aufweist, welche vorzugsweise in eine sockeloberseitige Aufnahme (24) für ein Befestigungsmittel übergeht.

8. Dachspoiler (10) nach Anspruch 1 bis 7, **dadurch gekennzeichnet, dass** der materialgeschwächte Bereich sich quer oder zumindest im Wesentlichen senkrecht zur Längsrichtung des Dachpoilers (10) erstreckt.

9. Dachspoiler (10) nach einem der Ansprüche 1 bis 8, **dadurch gekennzeichnet, dass** die Sockelwandung (23) an einem in Sockelumfangsrichtung verlaufenden Wandungsabschnitt mehrere benachbarte materialgeschwächte Bereiche aufweist, welche durch einen Steg (25a) der Sockelwandung voneinander getrennt sind, und dass der Steg (25a) an der Innenfläche der Oberschale (12) einstückig angeformt ist.

10. Dachspoiler nach einem der Ansprüche 1 bis 9, **dadurch gekennzeichnet, dass** der Sockel (21) an seiner Oberseite über die Befestigungsmittelaufnahme oder den Befestigungsbereich hinaus plateauförmig verbreitert ist.

11. Dachpoiler (10) nach Anspruch 10, **dadurch gekennzeichnet, dass** in dem Übergangsbereich zwischen der plateauförmigen Sockelverbreiterung und der Befestigungsmittelaufnahme auf der Sockelseite, in welcher die Befestigungsmittelaufnahme (24) mündet, die Sockeloberseite (22) mit einem Steg (25a) an der Oberschale (12) einstückig angeformt ist.

12. Dachspoiler (10) nach einem der Ansprüche 1 bis 11, **dadurch gekennzeichnet, dass** die Sockelwandung (23) mit zumindest einem oder mehreren einstückig angeformten Versteifungsrippen (32) mit der Oberschale (12) verbunden ist.

13. Kraftfahrzeug mit Dachspoiler gemäß einem der Ansprüche 1 bis 12.

14. Kraftfahrzeug mit Dachspoiler (10) nach Anspruch 13, **dadurch gekennzeichnet, dass** der zumindest eine vorbestimmte Befestigungsbereich (20) des Dachspoilers (10) oder mehrere Befestigungsbereiche (20) des Dachspoilers (10) zur Befestigung desselben an dem Fahrzeug, welcher/welche an der Oberschale einstückig angeformt ist/sind, unmittelbar an einem einstückigen Korpus der Rückwandtür des Fahrzeuges befestigt ist/sind.

15. Verfahren zur Herstellung eines Dachspoilers (10) nach einem der Ansprüche 1 bis 12, wobei die Oberschale (12) des Dachspoilers (10) als Spritzprägeteil ausgebildet wird und wobei die vorbestimmten Befestigungsbereiche (20) zur Befestigung des Dachspoilers (10) an dem Fahrzeug zumindest teilweise oder vollständig an der Oberschale (12) einstückig angeformt werden.

## Claims

1. Roof spoiler (10) of a motor vehicle, in particular of a passenger car, the roof spoiler comprising a body, wherein the body comprises:
- an upper shell (12) which, when the roof spoiler (10) is mounted on the vehicle, is arranged or can be arranged in the extension of a vehicle roof surface and which is provided on the surface with a color coating, and
- a lower shell (13) which, in the mounting arrangement of the roof spoiler (10) on the vehicle, faces the vehicle floor or can be arranged to face the vehicle floor,
the roof spoiler (10) having predetermined mounting regions (20) for mounting the roof spoiler on the vehicle,
the roof spoiler (10) being designed as an elongated component with a longitudinal direction, which extends in the direction of or over the vehicle width in its fastening arrangement on the vehicle,
the roof spoiler (10) having a front side which can be arranged on the motor vehicle facing the front of the vehicle or is arranged in the fastening arrangement on the vehicle,
and wherein the roof spoiler (10) has a rear side which can be arranged facing the rear of the vehicle or forming the rear of the vehicle or is arranged in the fastening arrangement of the roof spoiler (10) on the vehicle,
wherein the predetermined mounting regions (20) for mounting the roof spoiler (10) to the vehicle are at least partially or completely integrally formed on the upper shell (12),
wherein the upper shell (12) and the lower shell (13) are connected to one another in a tension-absorbing manner by latching means (18) and/or form-fitting means,
and wherein the at least one predetermined fastening region (20) for fastening the roof spoiler (10) to the vehicle, which is integrally formed on the upper shell (12), comprises a base (21) which is integrally formed in one piece on the upper shell (3),
**characterized in that**
the upper shell (3) of the roof spoiler (2) is designed as an injection-compression molding part and
that a base wall (23) comprises at least one or more weakened areas (28) which is/are separated from the fastener receiver (24) on the base upper side (22) by a preferably at least essentially dimensionally stable base area.

2. Roof spoiler (10) according to claim 1, **characterized in that** the rear side of the spoiler is designed as an apron (16), **in that** the apron is formed at least partially by an edge region of the upper shell (3), and **in that** the upper shell edge region adjoins the upper shell body without undercuts.

3. Roof spoiler (10) according to claim 1 or 2, **characterized in that** the rear side of the roof spoiler (10) is designed as an apron (16), and **in that** the lower shell edge region adjoins the lower shell body without undercuts.

4. Roof spoiler (10) according to one of the claims 1 to 3, **characterized in that** the upper shell (12) is surface colour-coated and **in that** a colour dividing line is arranged between the colouring of the upper shell (12) and the colouring of the lower shell at the transition between the upper shell (12) and the lower shell.

5. Roof spoiler (10) according to one of claims 1 to 4, **characterized in that** the upper shell (12) is surface-coated with paint and **in that** a dividing line between the upper shell (12) and the lower shell (13) runs on the rear side of the roof spoiler (10).

6. Roof spoiler (10) according to claims 1 to 5, **characterized in that** the base (21) comprises a base upper side (22) spaced apart from the inner surface of the top shell (12), and a base wall (23) which connects the base upper side (22) to the top shell (12), and that preferably the base upper side (22) has a receptacle (24) for a fastening means or a fastening means for connecting the roof spoiler (10) to the vehicle body.

7. Roof spoiler (10) according to one of claims 1 to 6, **characterized in that** the base wall (23) of the base (21) comprises a first opening (25) which preferably merges into a receptacle (24) on the upper side of the base for a fastening means.

8. Roof spoiler (10) according to claims 1 to 7, **characterized in that** the region weakened in material extends transversely or at least essentially perpendicularly with respect to the longitudinal direction of the roof spoiler (10).

9. Roof spoiler (10) according to one of claims 1 to 8, **characterized in that** the base wall (23) comprises a plurality of adjacent material-weakened areas, which are separated from one another by a bridge (25a) of the base wall, and that the bridge (25a) is integrally formed on the inner surface of the upper shell (12).

10. Roof spoiler according to one of claims 1 to 9, **characterized in that** the base (21) is widened in a plateau-like manner on its upper side beyond the fastener receiving means or the fastening region.

11. Roof spoiler (10) according to claim 10, **characterized in that**, in the transition region between the plateau-shaped widening of the base and the fastener-receiving means on that side of the base into which the fastener-receiving means (24) opens, the top side (22) of the base is integrally formed in one piece with a bridge (25a) on the upper shell (12).

12. Roof spoiler (10) according to one of the claims 1 to 11, **characterized in that** the base wall (23) is connected to the upper shell (12) by means of at least one or more integrally formed stiffening ribs (32).

13. A motor vehicle with a roof spoiler according to one of claims 1 to 12.

14. A motor vehicle with a roof spoiler (10) according to claim 13, **characterized in that** the at least one predetermined fastening area (20) of the roof spoiler (10) or a plurality of fastening areas (20) of the roof spoiler (10) for fastening the same to the vehicle, which is/are integrally formed on the upper shell, is/are fastened directly to an integral body of the rear panel door of the vehicle.

15. A method for producing a roof spoiler (10) according to one of the claims 1 to 12, wherein the upper shell (12) of the roof spoiler (10) is formed as an injection-compression molded part and wherein the predetermined fastening regions (20) for fastening the roof spoiler (10) to the vehicle are formed at least partially or completely on the upper shell (12) in one piece.

## Revendications

1. Becquet de toit (10) d'un véhicule automobile, en particulier d'une voiture particulière, le becquet de toit présentant un corps, le corps comprenant :
- une coque supérieure (12) qui, à l'état fixé du becquet de toit (10) sur le véhicule, est disposée ou peut être disposée dans le prolongement de la surface du toit du véhicule et qui est revêtue en surface d'une couche de peinture, et
- une coque inférieure (13) qui, à l'état fixé du becquet de toit (10) sur le véhicule, est disposée ou peut être disposée en étant tournée vers le plancher du véhicule,
dans lequel
le becquet de toit (10) présente des zones de fixation prédéterminées (20) pour sa fixation sur le véhicule,
le becquet de toit (10) est réalisé sous la forme d'un composant allongé avec une direction longitudinale, qui, à l'état fixé sur le véhicule, s'étend en direction de la largeur ou sur la largeur du véhicule,
le becquet de toit (10) présente une face avant qui, à l'état fixé sur le véhicule, est disposée ou peut être disposée en étant tournée vers l'avant du véhicule, et le becquet de toit (10) présente une face arrière qui, à l'état fixé du becquet de toit (10) sur le véhicule, est disposée ou peut être disposée en étant tournée vers l'arrière du véhicule ou en formant l'arrière du véhicule,
les zones de fixation prédéterminées (20) pour la fixation du becquet de toit (10) sur le véhicule sont conformées au moins partiellement ou entièrement d'un seul tenant sur la coque supérieure (12),
la coque supérieure (12) et la coque inférieure (13) sont reliées l'une à l'autre par des moyens d'enclenchement (18) et/ou des moyens de liaison par coopération de forme de manière à absorber les forces de traction,
et ladite au moins une zone de fixation prédéterminée (20) pour la fixation du becquet de toit (10) sur le véhicule, laquelle est conformée sur la coque supérieure (12), comprend un socle (21) qui est conformé d'un seul tenant sur la coque supérieure (12),
**caractérisé en ce que**
la coque supérieure (3) du becquet de toit (10) est réalisée sous la forme d'une pièce moulée par injection-compression, et
**en ce qu'**une paroi de socle (23) présente au moins une ou plusieurs zones (28) à affaiblissement de matière, qui est séparée du logement de moyen de fixation (24) sur la face supérieure de socle (22) par une zone de socle de préférence au moins sensiblement indéformable.

2. Becquet de toit (10) selon la revendication 1,
**caractérisé en ce que** la face arrière du becquet est réalisée sous forme de jupe (16), **en ce que** la jupe est réalisée au moins partiellement par une zone de bordure de la coque supérieure (3), et **en ce que** la zone de bordure de la coque supérieure se raccorde sans contre-dépouille au corps de la coque supérieure.

3. Becquet de toit (10) selon la revendication 1 ou 2,
**caractérisé en ce que** la face arrière du becquet de toit (10) est réalisée sous forme de jupe (16), et **en ce que** la zone de bordure de la coque inférieure se raccorde sans contre-dépouille au corps de la coque inférieure.

4. Becquet de toit (10) selon l'une des revendications 1 à 3,
**caractérisé en ce que** la coque supérieure (12) est revêtue en surface d'une couche de peinture, et **en ce qu'**une ligne de séparation des couleurs entre la coloration de la coque supérieure (12) et la coloration de la coque inférieure est disposée à la transition entre la coque supérieure (12) et la coque inférieure.

5. Becquet de toit (10) selon l'une des revendications 1 à 4,
**caractérisé en ce que** la coque supérieure (12) est revêtue en surface d'une couche de peinture, et **en ce qu'**une ligne de séparation entre la coque supérieure (12) et la coque inférieure (13) s'étend sur la face arrière du becquet de toit (10).

6. Becquet de toit (10) selon l'une des revendications 1 à 5,
**caractérisé en ce que** le socle (21) présente une face supérieure de socle (22) espacée de la surface intérieure de la coque supérieure (12), ainsi qu'une paroi de socle (23) qui relie la face supérieure de socle (22) à la coque supérieure (12), et **en ce que**, de préférence, la face supérieure de socle (22) présente un logement (24) pour un moyen de fixation ou présente un moyen de fixation pour relier le becquet de toit (10) à la carrosserie du véhicule.

7. Becquet de toit (10) selon l'une des revendications 1 à 6,
**caractérisé en ce que** la paroi (23) du socle (21) présente un premier ajour (25) qui se prolonge de préférence par un logement (24) pour un moyen de fixation sur la face supérieure du socle.

8. Becquet de toit (10) selon l'une des revendications 1 à 7,
**caractérisé en ce que** la zone à affaiblissement de matière s'étend transversalement ou au moins sensiblement perpendiculairement à la direction longitudinale du becquet de toit (10).

9. Becquet de toit (10) selon l'une des revendications 1 à 8,
**caractérisé en ce que** la paroi de socle (23) présente, sur une partie de paroi s'étendant dans la direction périphérique du socle, plusieurs zones voisines à affaiblissement de matière qui sont séparées les unes des autres par une barrette (25a) de la paroi de socle, et **en ce que** la barrette (25a) est formée d'un seul tenant sur la surface intérieure de la coque supérieure (12).

10. Becquet de toit selon l'une des revendications 1 à 9,
**caractérisé en ce que** sur sa face supérieure, le socle (21) est élargi en forme de plateau au-delà du logement de moyen de fixation ou de la zone de fixation.

11. Becquet de toit (10) selon la revendication 10,
**caractérisé en ce que** dans la zone de transition entre l'élargissement du socle en forme de plateau et le logement de moyen de fixation, sur le côté du socle dans lequel débouche le logement de moyen de fixation (24), la face supérieure de socle (22) est conformée d'un seul tenant avec une barrette (25a) sur la coque supérieure (12).

12. Becquet de toit (10) selon l'une des revendications 1 à 11,
**caractérisé en ce que** la paroi de socle (23) est reliée à la coque supérieure (12) par au moins une ou plusieurs nervures de renfort (32) conformées d'un seul tenant.

13. Véhicule automobile équipé d'un becquet de toit selon l'une des revendications 1 à 12.

14. Véhicule automobile équipé d'un becquet de toit (10) selon la revendication 13,
**caractérisé en ce que** ladite au moins une zone de fixation prédéterminée (20) du becquet de toit (10) ou plusieurs zones de fixation (20) du becquet de toit (10) pour sa fixation sur le véhicule, qui est/sont conformée(s) d'un seul tenant sur la coque supérieure, est/sont fixée(s) directement sur un corps monobloc du hayon du véhicule.

15. Procédé de fabrication d'un becquet de toit (10) selon l'une des revendications 1 à 12,
dans lequel la coque supérieure (12) du becquet de toit (10) est réalisée sous la forme d'une pièce moulée par injection-compression, et les zones de fixation prédéterminées (20) pour la fixation du becquet de toit (10) sur le véhicule sont conformées au moins partiellement ou entièrement d'un seul tenant sur la coque supérieure (12).
